# EUROPEAN PATENT SPECIFICATION

(11) **EP 4 087 981 B1**
(45) Date of publication and mention of the grant of the patent: **10.06.2026**
(21) Application number: 21700206.2
(22) Date of filing: 08.01.2021
(51) Int. Cl.: E02D 5/28, B63B 35/00, E02D 27/42, F03D 13/25, F16L 1/15, F16L 1/20, E02D 13/04

(54) **A PILE UPENDING AND HOLDING SYSTEM**
PFAHLKIPP- UND FÜHRUNGSVORRICHTUNG
DISPOSITIF DE BASCULE ET DE RETENUE DE PIEUX

(30) Priority: 10.01.2020 NL 2024651
(43) Date of publication of application: 16.11.2022
(73) Proprietor: Itrec B.V., 3115 HH Schiedam (NL)
(72) Inventor: BOELENS, Rene Corneille Losiriai, 3115 HH Schiedam (NL); VEHMEIJER, Terence Willem August, 3115 HH Schiedam (NL)
(74) Representative: EP&C
(86) International application number: PCT/EP2021/050300
(87) International publication number: WO 2021/140217

(56) References cited:
- EP-A1- 3 517 479
- JP-U- S6 221 139

## Description

The invention relates to a pile upending and holding system configured to be mounted on a vessel, e.g. for installation of a pile adapted to support an offshore wind turbine. The invention further relates to a vessel comprising such a system and a pile installation method in which use is made of such a vessel and/or a pile holding system.

Installation of an offshore wind turbine comprises the step of installing the foundation, often in the form of a pile, of the offshore wind turbine. A pile is installed by driving the pile into the sea bottom after which the upper part of the wind turbine is installed on top of the pile. In known methods the pile is transported to the installation location on board a vessel. due to the size and weight of the piles used, the piles are preferably transported in a substantially horizontal orientation. Once the vessel has arrived at the pile installation location the pile is upended, i.e. is picoted in an upright position, and is set up at the pile installation location for driving the pile, more in particular a lower part of the pile, into the sea floor. During driving the pile is supported by a pile holding system comprised on the vessel.

For example, publication EP3517479 discloses a pile upending and holding system comprising an upending tool configured to engage a first part of a pile, and a gripping tool configured to engage a second part of the pile. Both the upending tool and the gripping tool are connected to an edge of the vessel. Furthermore, a crane is sued to lift the pile into the upending tool, for upending the pile while supported by the upending tool, for supporting the pile while the pile is being transferred to the gripping tool, and for lowering the pile towards the sea floor while the pile is held by the gripping tool.

There is a trend towards larger wind turbines and a desire to install offshore wind turbines at locations with larger water depths than currently encountered. Both result in larger and heavier foundations. Hence, it is expected that in the near future piles need to be installed that are larger than 100 metres, possibly 120 metres or larger. The weight of such piles may be larger than 1000mt, possibly 1300mt or above. The increase in size and weight makes that transporting and manipulating these piles, in particular upending these piles, is increasingly difficult.

It is an object of the invention to provide an alternative pile upending and holding system. It is a further object of the invention to provide a pile upending and holding system that allows for more controlled manipulation of a pile, preferably allows for a controlled and efficient way for upending a pile and preferably for subsequently lowering the pile towards the sea floor.

According to the present invention, this object is achieved by a pile upending and holding system according to claim 1.

A pile upending and holding system configured to be mounted on a vessel, e.g. for installation of a pile adapted to support an offshore wind turbine, according to the invention comprises:
- a support assembly configured to be mounted on the vessel, e.g. on a deck of the vessel,
- a pile holder tiltable mounted on the support assembly, wherein the pile holder is tiltable about a substantially horizontal tilt axis relative to the support assembly between a horizontal orientation, in which the pile holder is able to receive and support a pile in a substantially horizontal orientation prior to upending, and a vertical orientation, in which the pile holder is able to hold a pile in a substantially vertical orientation, e.g. for installation of the pile,

wherein the pile holder comprises:
   - a ring, for engaging the pile,
   - a pile holder frame supporting the ring,
   - a pile foot end support, the pile foot end support vertically below the ring when the pile holder is in the vertical orientation, wherein the pile foot end support is secured to the pile holder frame and/or to the ring,
wherein the pile foot end support is configured to engage with the pile foot end of the pile in order to limit longitudinal movement of the pile, at least during upending of the pile,
wherein the ring comprises multiple pile engaging devices distributed about the circumference of the ring, each pile engaging device being adapted to engage an exterior of a pile extending through the ring,
wherein the ring comprises a ring base, mounted to the pile holder frame, and wherein the ring base extends along a section of the circumference of the ring, between a first end and a second end, and the ring base defines a pile transfer opening between the first and second end, and wherein the ring base at the first end and/or at the second end is provided with a moveable jaw, e.g. a semi-circular jaw, each jaw being movable between:
   - a closed position, wherein the ring forms a closed annulus, and
   - an opened position, wherein the pile transfer opening is open to allow for a pile to be moved in a lateral direction, i.e. in a direction substantially perpendicular to a longitudinal axis of the pile, through the pile transfer opening into a position in the pile holder, in which position of the pile the one or more moveable jaws of the ring can be moved into the closed position such that the pile is received in the closed annulus of the ring,
wherein the section, along which the ring base extends along the circumference of the ring, is long enough, and thus the pile transfer opening is wide enough, to enable the pile to be moved in a first lateral pile transfer direction and in a second lateral pile transfer direction through the pile transfer opening, and wherein the first lateral pile transfer direction is at an angle to the second lateral pile transfer direction, preferably is at an angle in the range of 45 degrees to 120 degrees, preferably is at an angle of 90 degrees,
wherein the pile holder is embodied with the pile transfer opening of the ring facing horizontally sideways and at least partially upwards, such that when the pile holder is in the horizontal orientation, the first lateral pile transfer direction is substantially horizontal and the second lateral pile transfer direction is substantially vertical,
such that when the pile holder is in the horizontal orientation, the pile transfer opening allows for moving the pile in a horizontal orientation in the substantially horizontal pile transfer direction through the pile transfer opening, and
such that when the pile holder is in the vertical orientation, the pile transfer opening allows for moving the pile away from the vessel in the second lateral pile transfer direction through the pile transfer opening, and
wherein the pile holder is embodied so that, when the pile holder is in the horizontal orientation, the ring base of the ring forms a bottom section of the annulus, for supporting the pile when received in the pile holder.

The invention provides the pile upending and holding system according to claim 1, which comprises a pile holder having a pile transfer opening that is wider, i.e. that extends along a larger section of the annulus of the ring, than the pile transfer opening of the pile holder with the C-shaped ring. In such an embodiment, the ring is for example substantially L-shaped, comprising a pile transfer opening that is not only facing horizontally sideways, but also upwards. The main benefit of such a pile holder is that it allows for a pile to be moved through the pile transfer opening in a first lateral pile transfer direction and in a second lateral pile transfer direction, the first lateral pile transfer direction being at an angle to the second lateral pile transfer direction, preferably is at an angle in the range of 45 degrees to 120 degrees.

In a preferred embodiment of the system according to claim 1, the angle between the first pile transfer direction and the second pile transfer direction is about 90 degrees. In such an embodiment, the at least one ring of the pile holder may be essentially L-shaped.

Providing the at least on ring with a pile transfer opening that, when the pile holder is in the horizontal orientation, faces horizontally sideways and at least partially upwards, i.e. with a pile transfer opening that allows for a first pile transfer direction and a second pile transfer direction, the angle between the pile transfer directions being about 90 degrees, allows for moving the pile in horizontal orientation in a substantially horizontal pile transfer direction through the pile transfer opening, when the pile holder is in the horizontal orientation. Thus, the pile can be moved in a substantially horizontal direction, i.e. substantially parallel to the deck of the vessel, into the pile holder, with all the benefits of the pile upending and holding system having at least one ring with a pile transfer opening that, when the pile holder is in the horizontal orientation, faces sideways, i.e. not upwards or downwards, disclosed above.

Furthermore, a pile holder with a pile transfer opening that, when the pile holder is in the horizontal orientation, faces horizontally sideways and at least partially upwards, also allows for moving the pile away from the vessel when the pile holder is in the vertical orientation. Thus, when the pile is upended and installed, or is supported in the upended position by a crane on another vessel, and the at least one yaw is in the opened position, the pile can be moved through the pile transfer opening by the vessel moving away from the pile. This facilitates moving the vessel away from the pile, once the pile is upended, because, once the pile is outside the pile holder, it is also away from the vessel.

In case of the pile holder having a C-shaped opening, once the installed pile is moved out of the pile holder, it is still relatively close to the vessel, and still requires precise vessel movement to prevent the vessel from colliding with the pile. Furthermore, first having to move the pile out of the pile holder, or moving the pile holder away from the pile, and subsequently moving the vessel away from the pile, takes more time than simple combining those two actions in a single movement. Thus the pile upending and installation process can be shortened.

It is submitted that the pile holder comprising the wider pile transfer opening is configured to allow for a pile to be moved into the pile holder in a substantially horizontal pile transfer direction, and thus allows for the same benefits as the pile holder with the C-shaped ring or rings. Furthermore, both type of pile holders can be used with a transport and positioning system as disclosed herein.

The invention thus provides an alternative pile upending and holding system.

Furthermore, a pile upending and holding system according to the invention allows for more controlled manipulation of a pile.

A pile holder according to the invention may be provided with a single ring for engaging and holding a pile, or with two or more rings for engaging and holding a pile in a position in the pile holder. In case there are provided two rings, herein will be referred to the lower ring and the upper ring. thus, in an embodiment, one or more rings are provided between the lower ring and the upper ring.

Furthermore, in case the pile holder comprise multiple rings, preferably the rings are similar, i.e. all rings are similar in design and/or use. For example, all rings may comprise identically dimensioned pile transfer openings, which pile transfer openings are located in line with each other, to enable a pile to be transferred, in a lateral direction, through all the pile transfer openings at the same time.

According to the claimed invention, the inventive pile upending and holding system according to the claimed invention is configured to enable sideways loading, i.e. inserting the pile in a horizontal orientation in a substantially horizontal direction into the pile holder, and supporting the pile in that horizontal orientation with the pile holder. Therefore, when the pile holder is in the horizontal orientation, the pile transfer opening of the ring faces, or the pile transfer openings of the lower ring and the upper ring face horizontally sideways and at least partially upwards, and the ring base of the ring, or the ring base of the lower ring and the upper ring, form a bottom section of the annulus for supporting the pile.

The pile holder thus enables moving the pile in horizontal orientation in a substantially horizontal pile transfer direction through the pile transfer openings, and placing the pile in horizontal orientation with a lower end portion thereof on the ring base of the ring, or the ring bases of the lower ring and the upper ring, of the pile holder.

In contrast, prior art pile upending devices typically comprise an entry port facing upwards when the upending device is in the horizontal orientation. A crane is used to lift the pile up from a pile storage system, move the pile into a position above the upending device, and to subsequently lower the pile into the upending device.

The substantially horizontal pile transfer direction according to the claimed invention allows for moving the pile comparatively close along the deck of the vessel on which the pile upending and holding system is mounted. Thus, the required amount of vertical travel of the pile, for moving it from the pile storage system into the pile holder, is reduced, and the centre of gravity of the pile is moved comparatively close along the deck of the vessel.

The low centre of gravity of the pile, and therefore of the combination of the vessel and the pile, makes that a vessel on which the pile upending and holding system is mounted remains more stable while placing the pile in the pile holder, without requiring additional (dynamic) ballast systems. Therefore, even though the pile upending and holding system according to the claimed invention may also be used with a jack up type vessel, the pile upending and holding system is in particular suited for use in combination with floating vessel. This in contrast with the prior art vessels used for upending and driving foundation piles, which are typically jack up vessels.

Also, because the amount of vertical travel, compared to prior art up ending devices, is minimal, the trajectory along which the pile has to be moved is comparatively short. This allows for a controlled and efficient way for upending a pile.

Furthermore, compared to the system disclosed in EP 3 517 479 the pile upending and holding system according to the claimed invention avoids the provision of separate tools for the upending stage and for the pile gripping function during installation of the upended pile into the seabed. In said known system an intermediate stage exists wherein the pile, which is commonly of vast dimensions and mass, has to be transferred from being retained by the upending tool to being retained by the independent gripping tool. In the inventive system such undesirable intermediate stage is avoided.

With a pile holder according to the invention, the ring base of the ring forms, or the ring base of the lower ring and the ring base of the upper ring form, a bottom section of the annulus, when the pile holder is in the horizontal orientation. Thus, a pile, when in the support position in the pile holder, i.e. in a horizontal orientation in the pile holder, is supported by the ring base of the ring, or the ring base of the lower ring and the ring base of the upper ring, of the pile holder.

In an embodiment, to enable the pile to be supported by the ring base of the ring, or the ring base of the lower ring and the ring base of the upper ring, the respective ring bases preferably extend along at least the lowest 10% of the annulus of the respective ring, when the pile holder is in the horizontal orientation. In an embodiment, the ring bases extend along at least the lowest 20% of the annulus of the respective ring, for example extend along the lowest 30% of the ring, or of the lower ring and the upper ring, when the pile holder is in the horizontal orientation.

In a further embodiment, the ring base of the ring, or the ring base of the lower ring and the ring base of the upper ring, extends along at least the lowest section, i.e. the bottom section, of the annulus of the respective ring, when the pile holder is in the horizontal orientation. In an embodiment, the ring bases extend along at least the lowest 20% of the annulus of the respective ring, for example extend along the lowest 30% of the annulus of the respective ring, or of the lower ring and of the upper ring, when the pile holder is in the horizontal orientation.

In an embodiment, of a pile holder according to the invention, the ring base of the upper ring and the ring base of the lower ring form a bottom section of the annulus, when the pile holder is in the horizontal orientation. Thus, a pile, when in the support position in the pile holder, i.e. in a horizontal orientation in the pile holder, is supported by the ring base of the lower ring and the ring base of the upper ring of the pile holder.

Preferably, the pile foot end support is fixed, or is configured to be fixed, to the ring base of the lower ring. In such an embodiment, at least the ring base of the lower ring preferably extends along more than 180 degrees of the annulus of the lower ring. Thus the pile foot end support can diametrically cross the annulus of the lower ring.

In an alternative embodiment, the pile end support foot is fixed, or is configured to be fixed, to pile holder frame. in such an embodiment, the support foot preferably is configured to support a pile on one side thereof only, and does not extend from one side of the pile end support foot to the opposite side of the pile end support foot, to support the pile end support foot on two sides thereof.

In an embodiment, the ring base of the lower and the ring base of the upper ring are at that bottom section provided with at least one pile engaging device, for supporting the pile when in the support position in the pile holder.

The lower ring and the upper ring, more in particular the annulus of the lower ring and the annulus of the upper ring, each have a central axis. Preferably, the central axis of the lower ring coincides with the central axis of the upper ring.

In an embodiment, the tilt axis intersects the central axis of the annulus of the lower ring and the upper ring, when seen in a direction parallel to the central axis of the lower ring and the upper ring.

In an embodiment, the lower ring and preferably the upper ring are symmetrical relative to the tilt axis, when seen in a direction parallel to a central axis of the lower ring and preferably a central axis of the upper ring.

The ring base of the lower ring and the ring base of the upper ring extend between a first end and a second end. When the pile holder is in the vertical orientation, the first end is a lower end, located in a vertical direction below the second end, and the second end is an upper end, located in a vertical direction above the first end.

It is obvious that the first end and the second end of the two rings should be spaced far enough away from each other to enable a pile to be moved between them into or out of the pile holder.

It is submitted that to enable the pile to be moved in a horizontal direction, and preferably in a direction substantially perpendicular to a longitudinal axis of the pile, through the pile transfer opening, these opening should face sideways and in a substantially horizontal direction. Furthermore, in a preferred embodiment, the ring base of the upper ring is located low enough to not form a substantial threshold, i.e. low enough to not require the pile to be substantially lowered after being moved into the pile holder.

In a further embodiment, the pile can be moved in a substantially horizontal direction into the pile holder and into the support position, in which support position the pile is located substantially at the centre of the lower ring and the upper ring of the pile holder. In such an embodiment, the pile holder and/or the lower ring and the upper ring, and/or supports, e.g. one or more pile engaging devices mounted in the lower ring and the upper ring are configured to be moved upwards to engage the pile, after being moved into the support position, and to transfer at least part of the weight of the pile onto the pile holder.

In an embodiment, to transfer at least part of the weight of the pile onto the pile holder, the pile, after being moved in a substantially horizontal direction into the pile holder, may have to be lowered to be placed on the ring base of the lower ring and the ring base of the upper ring of the pile holder, preferably on supports, e.g. one or more pile engaging devices mounted on the ring base.

In such an embodiment, the pile is transported into the pile holder by a device that is configured to support the pile, and to lower the pile.

In addition or as an alternative, after the is moved in a substantially horizontal direction into the pile holder, the pile holder and/or the lower ring and the upper ring, and/or supports, e.g. one or more pile engaging devices mounted in the lower ring and the upper ring are moved upwards to engage the pile, and transfer at least part of the weight of the pile onto the pile holder.

In such an embodiment, the pile holder, or at least the lower ring and the upper ring and/or one or more supports mounted in the lower ring and the upper ring, is/are configured to lift the pile, more in particular lift the pile from a device configured to move the pile in a substantially horizontal direction into the pile holder.

In an embodiment, the one or more movable jaws of the lower ring and the upper ring are moved into the closed position after the pile is moved into the pile holder, but prior to weight of the pile being transferred onto the pile holder.

The invention relates to piles that are to be driven into the sea floor, in particular to piles for supporting an offshore wind turbine. These foundation piles are to be driven into the sea floor to provide a base for mounting a construction on top thereof, e.g. a mast of an offshore wind turbine or an intermediate peace configured to in turn support the mast of an offshore wind turbine. A pile extends along a longitudinal axis between a foot end, to be driven into the sea floor, and a top end, for supporting a structure such as an intermediate peace or the mast of a turbine.

These types of piles may be larger than 100 metres, possibly 120 metres or larger. The weight of such piles may be larger than 1000mt, possibly 1300mt or above. The increase in size and weight makes that transporting and manipulating these piles, in particular upending these piles, is increasingly difficult. Typically these types of piles are transported on a vessel in a horizontal orientation, this to keep the centre of gravity of the combined vessel and piles low. Furthermore, due to the large weight of these types of piles, these types of piles are often transported in a position in which they extend in a direction perpendicular to the longitudinal axis of the vessel, and, due to the length of these types of piles, such that the foot end and the top end of the piles extend beyond the hull of the vessel on opposite sides of that vessel.

The pile holder according to the claimed invention is configured to hold a pile during the upending. The pile holder is furthermore configured to, after the pile has been upended, support the pile during the lowering of the pile towards the seafloor, and preferably during the pile being inserted into the seafloor as well. More in particular, after the upending, the pile holder supports the pile in the lateral direction, to thus enable powering the pile to the seafloor at the correct pile installation location. Preferably, the pile holder also supports the pile while the pile is being driven into the seafloor.

In contrast, the prior art pile upending and holding systems comprises an upending tool for upending the pile, and a separate gripping tool for holding the pile while lowering it to the sea floor.

When the one or more jaws are in the closed position, the pile holder defines, more in particular the ring of the pile holder defines or the lower ring and upper ring of the pile holder define, a pile passage for the pile. When the pile is positioned in the pile passage, this may alternatively be described as the pile being positioned in the pile holder. Being positioned in the pile holder thus implies that the one or more jaw of the one or more rings of the pile holder are in the closed position to form the pile passage.

It is submitted that, when herein is referred to the substantially horizontal pile transfer direction, in practice this direction of movement will be substantially parallel to the deck surface of the deck onto which the pile upending and holding system is mounted.

In an embodiment, the support assembly is configured to provide compensation for wave-induced motion of the vessel to maintain a predetermined X-Y location of the pile holder independent of the wave-induced motion of the vessel.

Furthermore, the pile holder is embodied with the pile transfer opening of the ring facing horizontally sideways and at least partially upwards, when the pile holder is in the horizontal orientation, to enable moving the pile in horizontal orientation in a substantially horizontal pile transfer direction through the pile transfer openings.

Therefore, the ring comprises a ring base mounted to the pile holder frame and one or more movable jaws. When the one or more jaws are in the opened position, the ring defines a pile transfer opening that allows for a pile to be moved in a lateral direction, i.e. in a direction substantially perpendicular to a longitudinal axis of the pile, through the pile transfer opening into a position in the pile holder.

In an embodiment, the ring base of the ring is at the bottom section provided with at least one pile engaging device, for engaging and supporting the pile when received in the pile holder.

Preferably, the ring comprises multiple pile engaging devices, distributed about the circumference of the ring, each pile engaging device being adapted to engage an exterior of a pile extending through ring, e.g. each pile engaging device comprises one or more pile guiding rollers.

In an embodiment, the ring base of the ring is at the bottom section provided with at least one pile engaging device, for engaging and supporting the pile when received in the pile holder.

In an embodiment, the pile holder comprises a pile support structure, wherein the pile support is configured to engage a pile that is held in the ring, and provide the pile with additional support during upending and/or while the pile is being lowered towards the seafloor.

In an embodiment, the pile holder comprises one or more additional rings in addition to the ring to enhance the lateral support the pile holder can provide a pile with. For example in an embodiment, the pile holder comprises a lower ring and an upper ring. The multiple rings are spaced relative to each other, such that the pile holder is engaged along an extended section thereof. As an alternative, instead of two separate rings, a single ring may be extended in an axial direction, providing the ring with a cylindrical shape, between a lower end and an upper end, wherein the ring is at both the lower end and the upper end provided with multiple pile engaging devices, distributed about the circumference of the ring.

In an embodiment, the ring is a lower ring, and the pile holder furthermore comprises an upper ring, wherein the pile holder frame supports the lower ring and the upper ring, the upper ring being spaced from the lower ring and the upper ring, and vertically above the lower ring when the pile holder is in the vertical orientation.

In a further embodiment, the upper ring comprises a ring base mounted to the pile holder frame and one or more movable jaws, e.g. two semi-circular jaws, each jaw being movable between:
- a closed position, wherein the upper ring forms a closed annulus, and
- an opened position, wherein the upper ring defines a pile transfer opening, and in which opened position the jaws allow for a pile to be moved in a lateral direction, i.e. in a direction substantially perpendicular to a longitudinal axis of the pile, through the pile transfer opening into a position in the pile holder, in which position of the pile the one or more moveable jaws of the upper ring can be moved into the closed position such that the pile is received in the closed annulus of the upper ring.

Preferably, the upper ring comprises multiple pile engaging devices, similar to the pile engaging devices provided for the lower ring, distributed about the circumference of the ring, each pile engaging device being adapted to engage an exterior of a pile extending through upper ring structure, e.g. each pile engaging device comprises one or more pile guiding rollers.

The pile engaging devices preferably are configured to be secured in a position in which they engage the pile in the support position. In an embodiment, the pile engaging devices are hydraulically powered.

It is submitted that, in case the pile holder comprises a lower ring and an upper ring, the lower ring and the upper ring of the pile holder are spaced relative to each other, such that they engage the pile at different sections thereof. This provides the pile holder with a more secure grip, i.e. minimize pivoting of the pile relative to the pile holder. This is in particular relevant during the upending process. Furthermore, in an embodiment, the lower ring and the upper ring comprise multiple pile engaging devices distributed about the circumference of the respective ring, each pile engaging device being adapted to engage an exterior of a pile extending through the lower and upper ring structures, e.g. each pile engaging device comprises one or more pile guiding rollers,
In an embodiment, wherein the pile holder comprises a lower ring and an upper ring, when the pile holder is in the vertical orientation, the tilt axis of the pile holder is located vertically between the lower ring and the upper ring.

Typically, a vessel provided with a pile upending and holding system according to the claimed invention, is also provided with a pile storage system, i.e. a system for supporting one or more piles in a substantially horizontal orientation during travel, for example during travel from one pile installation location to another pile installation location. Preferably, the piles are stored in a substantially horizontal orientation, and substantially perpendicular to a longitudinal axis of the vessel.

In an embodiment the pile storage system comprises multiple pile supports mounted on the deck of the vessel. For example, a pile can be supported by two pile supports.

In an embodiment, the vessel comprises a pile transport system for lifting the pile out of the pile supports, and moving the pile towards and into the pile holder. For example, a crane can be used to lift the pile out of a pile storage cradle, and to move the pile from there in horizontal orientation in a substantially horizontal pile transfer direction through the pile transfer openings of the pile holder. In an alternative embodiment, not a crane but a track mounted pile transport device is provided, configured for lifting the pile out of the pile storage cradle, and to move the pile, along a track, from there in horizontal orientation in a substantially horizontal pile transfer direction through the pile transfer openings of the pile holder.

In yet another embodiment, a crane is used to lift a pile out of the pile storage cradle and onto a pile transport device, wherein the pile transport device is configured to move the pile, for example along a track, in horizontal orientation in a substantially horizontal pile transfer direction through the pile transfer openings of the pile holder.

In another embodiment, the pile holder is configured to move along a track, to engage a pile supported in the pile storage cradle, and to thus move the pile in horizontal orientation in a substantially horizontal pile transfer direction through the pile transfer openings of the pile holder. In an alternative embodiment, the pile is to be moved, for example by crane, form a pile storage cradle to a pile set up cradle, and the pile holder is configured to move along a track, to engage a pile supported in the pile set up cradle.

In an embodiment, the support assembly is configured to provide compensation for wave-induced motion of the vessel to maintain a predetermined X-Y location of the pile holder independent of the wave-induced motion of the vessel. Thus, in such an embodiment, the pile holder, when in a position for holding a pile in an upright position adjacent the vessel, can be moved relative to that vessel, to keep the pile at a predetermined pile installation location, while the position of the vessel, e.g. due to wind and/or waves acting upon the vessel, fluctuates relative to said pile installation location.

With a pile gripper according to the invention, the pile holder is configured for both the upending of the pile and the holding of the pile. Therefore, when the pile, in a horizontal orientation, is placed in the pile holder for being upended, the pile is in an embodiment engaged by the pile engaging devices which also engage the pile while it is being lowered towards the sea floor. Also, in an embodiment, when the pile, in a horizontal orientation, is placed in the pile holder for being upended, that pile is also configured to provide compensation for wave-induced motion of the vessel to maintain a predetermined X-Y location of the pile holder independent of the wave-induced motion of the vessel.

Thus, the pile upending and holding system according to the claimed invention furthermore avoids the provision of separate tools for the upending stage and for the pile gripping function during installation of the upended pile into the seabed.

In a further embodiment, the support assembly comprises one or more first rails extending in a longitudinal direction, a positioning frame movably supported on said one or more first rails in said longitudinal direction, where the positioning frame is provided with one or more second rails extending in a transverse direction, i.e. transverse to the longitudinal direction, and a support frame movably supported on said one or more second rails in said transverse direction, wherein the pile holder is supported tiltable about the tilt axis by the support frame. Thus, in such an embodiment, the pile holder is tiltable supported, and can be moved in a x-y direction, more in particular, when mounted on a vessel, can be moved in a longitudinal direction of the vessel and in a direction perpendicular to that longitudinal direction.

Thus, the pile upending and holding system according to the claimed invention furthermore avoids the provision of separate tools for the upending stage and for the pile gripping function during installation of the upended pile into the seabed.

In an embodiment, the pile holder is configured, in particular the pile foot end support is secured to the pile holder frame, such that the centre of gravity of the pile is located above the substantially horizontal tilt axis of the pile holder. This configuration reduces the chance of the pile overshooting, i.e. moving beyond, the upright position when being upended.

In an embodiment, the pile holder is provided with a damper cylinder, for damping movement of the pile holder when in the vertical orientation, to reduce swinging of the pile when the pile is pivoted into the upended position by the crane.

In an embodiment, the cylinder is with one end connected to the pivotable supported pile holder and with another end with the support assembly. In an alternative embodiment, a mechanism, comprising the damper cylinder, is connected with the pivotable supported pile holder and with the support assembly.

In addition, or as an alternative, one or more tugging winches with associated tugging wires may be provided for providing a counterforce to the lifting force of the crane, at least when the pile is near its upended position. In such an embodiment, the tugging wires may be attached to an upper section of the pile. When the crane lifts the top end of the pile, the upper section of the pile is tilted upwards, while the tugging wires at the same time exert a force to pull the pile in an opposite tilt direction. The crane counteracting the pulling force of the tugging wires makes that the pile is prevented to overshoot the upright position due to the crane not being sufficiently able to secure movement of the pile in a horizontal plane when the centre of gravity of the pile is located vertically below the load connector of the crane.

In an embodiment, the pile upending and holding system comprises pile holder pivot drive, for pivoting the pile holder relative to the support assembly, for example between the horizontal and the vertical orientation. For example to tilt the pile holder, e.g. after a pile has been driven into the sea floor, from the vertical orientation to the horizontal orientation. In an embodiment, the pivot drive may be used to move the pile holder with the pile being upended by the crane.

In an alternative embodiment, the pile holder is free, i.e. is not driven, to move with the pile being lifted in the upended position.

In an embodiment, each jaw extends between an inner end and an outer end, and each jaw is pivotable connected at the inner end thereof to a respective pivot part of the respective ring base, to pivot about a jaw pivot axis between the closed position and the opened position.

It is submitted that pivotable jaws allow for a simple and robust connection between the ring base and the at least one jaw.

In an alternative embodiment, the at least one jaw is a translating jaw. For example, the jaw may be moveably supported by the pile holder frame, such that, when the pile holder is in the horizontal orientation, the jaw can be moved in a substantially upward direction to open the pile transfer opening of the ring. In a further embodiment, the lower ring and the upper ring each comprise two jaws. Of the two jaws, one can be moved in the substantially downward direction and the other can be moved in the substantially upward direction, when the pile holder is in the horizontal orientation, to open the pile transfer opening and allow for the pile to be moved into the pile holder.

In another alternative embodiment, the jaw of the ring is supported by a jaw frame, which jaw frame is in turn pivotably supported by a support arm, the support arm being pivotably connected to the support assembly. In such an embodiment, the jaw is moved between the closed position and the open position by pivoting the support arm relative to the support assembly, and relative to the pile holder. Furthermore, in such an embodiment, when the jaw is in the closed position, the jaw frame is pivotable relative to the support arm about a tilt axis that coincides with the tilt axis of the pile holder. Thus, in such an embodiment, the pile holder is pivotable supported on two sides.

In a further alternative embodiment, in which the pile holder comprises a lower ring and an upper ring, the jaw of the lower ring and the jaw of the upper ring are both supported by a jaw frame, which jaw frame is in turn pivotably supported by a support arm, the support arm being pivotably connected to the support assembly. In such an embodiment, the jaws are moved between the closed position and the open position by pivoting the support arm relative to the support assembly, and relative to the pile holder. Furthermore, in such an embodiment, when the jaws are in the closed position, the jaw frame is pivotable relative to the support arm about a tilt axis that coincides with the tilt axis of the pile holder. Thus, in such an embodiment, the pile holder is pivotable supported on two sides.

In an embodiment, the pile holder comprises a lower ring and an upper ring, and the pile holder frame secures the lower ring and the upper ring relative to each other. In a further embodiment, the pile holder frame extends in an axial direction between the lower ring and the upper ring. In yet a further embodiment, the pile holder frame is a semi cylindrical frame that extends between the upper and the lower ring, and that partially encloses a side of a pile held in the pile holder. It is submitted that in such an embodiment, the pile holder frame may extend between the base ring of the lower ring and the base frame of the upper ring, such that the base rings, at least from the outside of the pile holder, may visually not be distinguishable as separate components.

In an embodiment, the substantially horizontal pile transfer direction is parallel to the substantially horizontal tilt axis of the pile holder. In such an embodiment, the pile, while being moved into the pile holder, is moved in a lateral direction, i.e. in a direction perpendicular to a longitudinal axis of the pile, only. It is submitted, that prior and/or after the pile has been moved into the pile holder, the pile may be move in an axial direction, i.e. in a direction parallel to a longitudinal axis of the pile. Thus, the lower end portion of the pile can be positioned correctly in the pile holder, in particular in a correct positon for engagement by the pile foot end support.

In an alternative embodiment, when the pile is moved in the substantially horizontal pile transfer direction, the pile is moved both in the lateral direction and in the axial direction at the same time.

In an embodiment, the support assembly comprises a base frame and a support frame, mounted on the base frame, and the support frame tiltable supports the pile holder such that the tilt axis is spaced from the base frame and such that, when the base frame is mounted on a vessel, at least during use of the pile holder, the tilt axis is located outside a contour of that vessel, when seen in a top view.

In a further embodiment, when the pile holder is in the horizontal orientation, the tilt axis intersects with the annulus of the ring, when seen in a direction parallel to a central axis of said annulus.

In a further embodiment, when the pile holder is in the horizontal orientation and wherein the pile holder instead of a ring comprises a lower ring and an upper ring, the tilt axis intersects with the annulus of the lower ring and with the annulus of the upper ring when seen in a direction parallel to a central axis of said annuli.

In these embodiments, the support frame supports the tilt axis, e.g. a bearing supporting a tilt axle of the pile holder frame, in a position spaced from the base frame, and the tilt axis intersects at least with the annulus of the ring, optionally with the annulus of the lower ring and with the annulus of the upper ring, when seen in a direction parallel to a central axis of said annuli.

These embodiments allows for the pile holder to be located close to the deck, because the pivotable connection supporting the pile holder is, in a vertical direction, not located between the pile holder and the support assembly. Therefore, a pile can be supported by the pile holder in a horizontal orientation and with its centre of gravity close to the deck of the vessel on which the pile upending and holding system is mounted.

In a further embodiment, when the pile holder is in the horizontal orientation, the tilt axis intersects with the annulus of the ring, or optionally with the annulus of the lower ring and the annulus of the upper if present, when seen in a direction parallel to a central axis of said annulus, and the tilt axis is in the vertical direction located between a bottom section and a top section of the lower ring and the upper ring respectively. In a further embodiment, the tilt axis intersects with the pile transfer opening of the lower ring, or with the pile transfer opening of the lower ring and the upper ring, when seen in a direction parallel to a central axis of said annuli.

Thus, when the pile holder is in the horizontal orientation, the base frame is located below the pile holder, and the support frame is located at at least one side of the pile holder. This allows for a configuration in which the pile holder is located close to a deck of the vessel on which the pile upending and holding system is mounted.

In a further embodiment, the support frame is located only on a side of the pile holder that is opposite from a side of the pile holder at which the pile transfer openings of the lower ring and the upper ring are located.

In a further embodiment, when the pile holder is in the horizontal orientation, the tilt axis lies in a plane that also comprises the central axis of the ring, or optionally, the central axis of the lower ring and the central axis of the upper ring. When a pile is held in the pile holder, the pile is held at the centre of the ting, or at the centre of the lower ring and at the centre of the upper ring respectively. Therefore, in these embodiments, the central axis of the pile substantially coincides with the central axis of the respective rings. Thus, in these embodiments, the central axis of the pile lies within the plane that also comprises the central axis of the ring and the tilt axis, or the central axis of the lower ring and the central axis of the upper ring and the tilt axis.

In such embodiments, the centre of gravity of a pile held in the pile holder lies substantially within the plane that comprises the tilt axis. This is in particular beneficial when the pile holder is in the vertical orientation and at least part of the weight of the pile holder is supported by the pile foot end support. In this configurations of the pile holder, the load vector does not generate a moment, i.e. the weight of the pile does not force the pile holder to pivot about the tilt axis. These configurations thus allow for the pile holder to provide a more stable support of the pile in the upended position.

In an embodiment, the pile upending and holding system further comprises a transport track and a pile transport cart, moveable supported by the transport track, for transporting the pile, in the horizontal orientation, along the transport track in the substantially horizontal pile transfer direction, through the pile transfer openings and into the support position in the pile holder.

Thus, the pile upending and holding system is furthermore configured to move a pile between a storage location on the deck of the vessel into the pile holder, without the use of a crane. It is submitted that a track based pile transport cart allows for highly controlled manipulation of the pile, in particular compared to moving a pile supported by hoisting wires into the pile holder.

Furthermore, the transport cart being supported on a deck based transport track allows for transporting the pile closely along the deck of the vessel form a storage location to the pile holder. Thus, the track based transport cart allows for an overall centre of gravity, i.e. a centre of gravity of the vessel and pile combined, during transport of the pile.

In such an embodiment, the pile transport cart can also be used for storage of the pile, e.g. while the vessel travels towards a pile installation location.

In a further embodiment, the transport track supports multiple pile storage cradles, for supporting multiple piles, preferably parallel to each other, in a storage location.

In an embodiment, the transport track extends parallel to a longitudinal axis of the vessel.

In a further embodiment, the at least one transport cart is furthermore configured to lift the pile, in a horizontal orientation, in a substantially vertical direction out of a pile storage cradle. In such an embodiment, the pile upending and holding system preferably furthermore comprises multiple pile storage cradles for each supporting a pile, which pile storage cradles are configured to be mounted to the deck, or to a deck mounted pile storage cradle support. In an embodiment, the one or more pile storage cradles each comprise for example two trestle like pile supports, preferably configured to engage the circumference of a pile, which may be located on opposite sides of the transport track, to support a pile at a lower section and at an upper section of that pile respectively. In this embodiment, the transport track and transport cart are located between the two supports of the pile storage cradles, such that the pile transport cart can be moved been the supports and under a pile supported by those supports, to engage the pile form below and lift the pile out of the supports.

In an embodiment, the transport track comprises at least two parallel, separate tracks, each track supporting a pile transport cart, preferably each track supporting an individual transport cart, wherein the carts are configured to engage, lift and transport a single pile with multiple transport carts in parallel.

In an alternative embedment, the pile upending and holding system comprises a pile guide system for guiding the pile, more in particular for keeping the pile in the correct position while it is being transported by the crane in a substantially horizontal transport direction into the pile holder. In such an embodiment, the guide system may comprise one or more tucking winches, with associated tucking wires that are connected to at least one section of the pile, to keep the pile in the correct position while being transported by the crane into the pile holder.

In an embodiment, the pile transport cart comprises a four rod mechanism, the four rod mechanism comprising a base movable mounted on the transport track, a pile support cradle for supporting the pile, and at least two support arms extending between the base and the pile support cradle.

In a further embodiment, the pile support cart is furthermore configured to move the pile in an axial direction, preferably wherein the cart comprises a pile support cradle that comprises multiple pile support rollers, and a drive for rotating one or more of the multiple pile support rollers to move the pile in an axial direction thereof.

In an embodiment, the pile engaging devices of the ring are movable over a corresponding arc segment of a circle relative to the ring, so as to allow for adaptation of the angular position of the pile engaging devices relative to the ring.

In a further embodiment, wherein the ring is a lower ring and the pile holder further comprises an upper ring, the pile engaging devices of the lower ring and the upper ring are movable over a corresponding arc segment of a circle relative to the corresponding ring, so as to allow for adaptation of the angular position of the pile engaging devices relative to the ring.

In an alternative embodiment, the pile engaging devices of the upper ring have a fixed angular position relative to the upper ring.

In an embodiment, the pile foot end support comprises one or more pivotal arms that are movable into an operative position wherein the one or more pivotal arms extend underneath the pile foot end and an opened position wherein the one or more pivotal arms are cleared from the pile foot end.

In an embodiment, the pile holder frame supports a hydraulic system for actuating the jaws and/or the pile engaging devices of the ring, or when the ring is a lower ring and the pile holder comprises a lower ring and an upper ring, of the lower and upper ring.

In an embodiment, the pile transfer direction is a lateral direction relative to the pile, i.e. a direction substantially perpendicular to a longitudinal axis of the pile.

The invention furthermore provides a pile upending and holding system configured to be mounted on a vessel, e.g. for installation of a pile adapted to support an offshore wind turbine, comprising:
- a support assembly configured to be mounted on the vessel, e.g. on a deck of the vessel;
- a pile holder tiltable mounted on the support assembly, wherein the pile holder is tiltable about a substantially horizontal tilt axis relative to the support assembly between a horizontal orientation, in which the pile holder is able to receive and support a pile in a substantially horizontal orientation prior to upending, and a vertical orientation, in which the pile holder is able to hold a pile in a substantially vertical orientation, e.g. for installation of the pile,

wherein the pile holder comprises:
   - a lower ring and an upper ring, for engaging the pile,
   - a pile holder frame supporting the lower ring and the upper ring,
   - a pile foot end support, the pile foot end support vertically below the lower ring when the pile holder is in the vertical orientation,
wherein the upper ring is spaced from the lower ring and wherein the upper ring is vertically above the lower ring when the pile holder is in the vertical orientation
wherein the pile foot end support is configured to engage with the pile foot end of a pile in order to limit longitudinal movement of the pile, at least during upending of the pile,
wherein the lower ring and the upper ring comprises multiple pile engaging devices distributed about the circumference of the ring, each pile engaging device being adapted to engage an exterior of a pile extending through the rings,
wherein the lower ring and the upper ring each comprises a ring base, mounted to the pile holder frame, and wherein the ring base extends along a section of the circumference of the lower ring and the upper ring respectively, between a first end and a second end, and the respective ring base defines a pile transfer opening between the first and second end, and wherein the respective ring base is at the first end and/or at the second end provided with a moveable jaw, e.g. a semi-circular jaw, each jaw being movable between:
   - a closed position, wherein the ring forms a closed annulus, and
   - an opened position, wherein the pile transfer opening is open to allow for a pile to be moved in a lateral direction, i.e. in a direction substantially perpendicular to a longitudinal axis of the pile, through the pile transfer opening into a position in the pile holder, in which position of the pile the one or more moveable jaws of the ring can be moved into the closed position such that the pile is received in the closed annulus of the ring,
wherein the pile foot end support is secured to the pile holder frame and/or to the lower ring, e.g. to the moveable yaw, or one of the two movable yaws, of the lower ring,
wherein the section, along which the respective ring base extends along the circumference of the lower ring and the upper ring, is long enough, and thus the pile transfer opening is wide enough, to enable the pile to be moved in a first lateral pile transfer direction and in a second lateral pile transfer direction through the pile transfer opening, and wherein the first lateral pile transfer direction is at an angle to the second lateral pile transfer direction,
wherein the pile holder is embodied with the pile transfer openings of the lower ring and the upper ring facing horizontally sideways and upwards, such that when the pile holder is in the horizontal orientation, the first lateral pile transfer direction is substantially horizontal and the second lateral pile transfer direction is substantially vertical,
wherein, when the pile holder is in the horizontal orientation, the pile transfer openings allow for moving the pile in a horizontal orientation in the substantially horizontal pile transfer direction through the pile transfer opening, e.g. for transferring a pile into or out of the pile holder using a deck mounted pile transport system, and
wherein, when the pile holder is in the horizontal orientation, the pile transfer openings allow for moving the pile in a horizontal orientation in the substantially vertical pile transfer direction through the pile transfer opening, e.g. for transferring a pile into or out of the pile holder using a crane.

In an embodiment, the pile holder is embodied so that, when the pile holder is in the horizontal orientation, the ring base of the lower ring and the ring base of the upper ring each form a bottom section of the annulus of the respective rings, for supporting the pile when received in the pile holder.

In an embodiment, the system further comprises a pile top end support for, when the pile holder is in the horizontal orientation, supporting a top end of a pile in a horizontal orientation in the pile holder, the pile support comprising a foot section, configured to be mounted on a deck of a vessel, and a support section, configured to engage the top end of the pile, wherein the support section of the pile support preferably is movable relative to the foot section such that when the pile support is mounted on the deck the top support section can be moved in a vertical direction, e.g. to adjust for pile having a different diameter.

Providing the system with such a pile end top support allows for long piles to be engaged by the pile holder. it is submitted that the top end of the pile is engaged by a crane when the pile is upended, and the load of the top end of the pile is than transferred to the crane.

The invention furthermore provides pile transport and positioning system in combination with a pile upending and holding system according to one or more of the claims, for moving a pile between a storage location and a pile holder and preferably for moving the pile in a substantially horizontal lateral pile transfer direction through a pile transfer opening of the pile holder, wherein the pile transport and positioning system comprises:
a transport track and two pile transport carts, wherein each cart is movable supported on a set of rails, for transporting the pile, in the horizontal orientation, along the transport track in the substantially horizontal pile transfer direction;
wherein the transport carts are each configured to in unison lift the pile, in the horizontal orientation, e.g. to lift a pile out of a pile storage cradle mounted on a deck on which the pile upending and holding system is also mounted, and to in unison move the pile along the transport track, e.g. to move the pile between a storage location and the pile holder, and preferably for moving the pile in the substantially horizontal lateral pile transfer direction through the pile transfer opening of the pile holder.

in an embodiment, the pile transport cart comprises a four rod mechanism, with a base movable mounted on the transport track, a pile support cradle for supporting the pile, and at least two support arms extending between the base and the pile support cradle, and an actuator for lifting and lowering the cradle relative to the base of the transport cart.

This embodiment of the cart allows for a compact configuration of the cart.

In an embodiment, the hinge axis of the four rod mechanism extend perpendicular to the track, more in particular perpendicular to the rails supporting the carts, such that the pile support cradle, when moved between a lowered and a lifted position, is moved along a curved trajectory in a plane perpendicular to the track, more in particular perpendicular to the rails of the track.

This embodiment allows for a simple positioning below the pile, prior to engaging the pile.

In an embodiment, the pile transport cart comprises a carriage, the carriage supporting the four rod mechanism, and wherein the four rod mechanism comprises:
- a base, which base is mounted on the carriage,
- a main support arm, which main support arm at one end is pivotable mounted to the base and at an opposite end is pivotable mounted to the pile support cradle, and
- a secondary support arm, which main support arm at one end is pivotable mounted to the base and at an opposite end is pivotable mounted to the pile support cradle, and is parallel to the main support arm.

In this embodiment, the cradle is part of four rod mechanism, allows for compact configuration, in particular when lowered, and provides easy positioning of cradle, i.e. keeping the cradle upright, during lifting and lowering

In an embodiment, the actuator for lifting and lowering the cradle is a linear actuator, e.g a hydraulic cylinder or an electric spindle, and wherein the linear actuator is at one end pivotably mounted to the base, and is at an opposite end pivotable mounted to a support mounted on the main support arm and extending at an angle to a longitudinal axis of the main arm, such that the opposite ends of the linear actuator are located on opposite sides of the main beam.

This embodiment allows for compact configuration, in particular when lowered, and provides easy positioning of cradle, i.e. keeping the cradle upright, during lifting and lowering
In an embodiment, the transport carts comprises a support arm, which support arm is at one end slideable mounted on the base of the cart, and is at an opposite end pivotable mounted on the main support arm, which support arm can be locked in a position to support the weight of the cradle, and at least part of the weight supported by the cradle.

In an embodiment, each of the carriages each comprise a power source for the actuator for moving the pile support cradle and for moving the carriage along the track
In an embodiment, the carriages each comprises a carriage positioning system, configured to determine the relative position of the respective carriages, and to move the carriages in unison and preferably to align the carriages relative to each other.

In an embodiment, the pile transport carts are furthermore configured to move the pile in an axial direction, preferably wherein the transport carts each comprises a pile support cradle that comprises multiple pile support rollers, and a drive for rotating one or more of the multiple pile support rollers to move the pile in an axial direction thereof.

The invention furthermore provides a method for upending and installation of a pile in the seabed, wherein preferably use is made of a system according to the invention, the method comprising, with the vessel in floating condition:
a. transporting the pile in a horizontal orientation to an offshore installation site;
b. positioning the pile holder in the horizontal orientation and moving the one or more jaws of the ring, or the one or more jaws of the lower ring and the upper ring, into the opened position, such that the pile transfer opening is facing sideways and at least partially upwards, or the pile transfer openings are facing sideways and at least partially upwards, respectively,
c. moving the pile in horizontal orientation in a substantially horizontal pile transfer direction through the pile transfer opening or pile transfer openings, and placing the pile in horizontal orientation with a lower end portion thereof on the ring base of the ring, or on the ring base of the lower ring and the ring base of the upper ring,
d. moving the one or more jaws of the ring, or of the lower ring and the upper ring, into the closed position, thus receiving the pile in the closed annuli of the ring or rings respectively,
e. upending the pile into vertical orientation by means of lifting an upper end portion of the pile, so that the pile, held at the lower end portion thereof in the pile holder, tilts about the horizontal tilt axis, and wherein the pile foot end support limits longitudinal movement of the pile in a downward direction, during the upending of the pile,
f. disengaging the pile foot end support from the lower end portion of the pile; and
g. lowering the pile into the water while being held and guided by pile engaging devices of the pile holder.

In an embodiment, the method furthermore comprises providing compensation for wave-induced motion of the vessel with the support assembly to maintain a predetermined X-Y location of the pile holder independent of the wave-induced motion of the vessel at least in step g.

In an embodiment, the method furthermore comprises, following step g, moving the one or more jaws of the ring, or of the lower ring and upper ring, into the opened position, and moving the pile holder relative to the pile in a direction parallel to a longitudinal direction of the vessel.

In an embodiment of a method according to the invention, the pile, when moved in the substantial horizontal pile transfer direction into the pile holder, is moved in a direction substantially perpendicular to a longitudinal axis of the pile.

In an embodiment, the method furthermore comprises, prior to step c, lifting the pile in a horizontal orientation from a pile storage cradle.

In an embodiment of a method according to the invention, step c or d furthermore comprises moving the pile in an axial direction.

In an embodiment of a method according to the invention, step d furthermore comprises:
- after closing the one or more jaws, engaging the pile with the pile engaging devices of the ring, or of the lower ring and the upper ring, and subsequently securing the pile engaging devices in that position.

In an embodiment of a method according to the invention, step e furthermore comprises:
- securing a hoisting wire of the crane to a top end of the pile, the top end being and end of the pile that is opposite the end that is received in the pile holder;
- tensioning the hoisting wire without substantially lifting the pile, and thus compensating for e.g. flexing of a boom of the crane and/or elongation of the hoisting wire of the crane when being fully loaded, wait at least 5 seconds prior to starting the up ending process;
- optionally, remove a pile storage cradle, other than the pile holder, from below the pile.

In an embodiment of a method according to the invention, step e furthermore comprises
- optionally, actively damping movement of the pile while the pile is moved into the upended position, to prevent the pile from significantly overshooting the upended position;
- once the pile is in the upended position, lifting the pile upwards and removing the pile foot end support;
- lowering the pile towards the sea floor.

The invention furthermore provides a vessel provided with a pile upending and holding system according to the invention, preferably for performing a method according to the invention, wherein the vessel has a longitudinal axis extending between a bow and a stern of the vessel, and wherein the vessel comprises a crane for upending a pile held in the pile holder.

In an embodiment, the vessel according to the invention is provided with multiple pile storage cradles, for each supporting a pile in a horizontal orientation and substantially perpendicular to a longitudinal axis of the vessel.

In a further embodiment of a vessel according to the claimed invention, the pile holder is located between the multiple pile storage cradles and the crane.

In an embodiment of a vessel according to the claimed invention, the tilt axis extends parallel to a longitudinal axis of the vessel.

In an embodiment of a vessel according to the claimed invention, the pile holder is mounted on a deck of the vessel, and is at the stern end of the vessel, and the pile transfer opening, or openings, of the pile holder face towards the bow end of the vessel.

In an alternative embodiment, the pile holder is mounted on a deck of the vessel, and is at the bow end of the vessel, and the pile transfer opening, or openings, of the pile holder face towards the stern end of the vessel.

In a further embodiment, the tilt axis of the pile holder extends parallel to the longitudinal axis of the vessel.

In an embodiment of a vessel according to the claimed invention, the vessel is a submersible vessel.

The invention furthermore provides a pile transport and positioning system with in a pile upending and holding system according to the invention, wherein the pile transport and positioning system comprises:
a transport track and a pile transport cart, moveable supported by the transport track, for transporting the pile, in the horizontal orientation, along the transport track in the substantially horizontal pile transfer direction, through a pile transfer opening of a pile holder;
wherein the at least one transport cart is configured to lift the pile, in a horizontal orientation, in a substantially vertical direction out of a pile storage cradle, which storage cradle preferably is mounted on a deck, preferably on a deck on which the pile upending and holding system is also mounted.

Thus, the invention also provides a pile transport and positioning system, configured to transport and positon foundation piles along the deck of a vessel between a pile storage location and a pile holder, and to position the pile relative to the pile holder.

By providing a pile transport and positioning system, no crane needs to be used for moving the pile. The system thus allows for moving the pile closely along the deck, which keeps the centre of gravity of the pile close to the deck. Furthermore, the system allows for a better control of the pile during transport. For example, a pile lifted by a crane is probe to swinging movement. Also, the deck mounted system allows for a more precise, and better controlled positioning of the pile relative to a pile holder. This is in particular beneficial when handling foundation piles, which due to their large size and heavy weight, are difficult to control, in particular when supported by wires.

In an embodiment of the pile transport and positioning system the pile transport cart comprises a four rod mechanism, with a base movable mounted on the transport track, a pile support cradle for supporting the pile, and at least two support arms extending between the base and the pile support cradle.

In an embodiment of the pile transport and positioning system, the pile transport cart is furthermore configured to move the pile in an axial direction, preferably wherein the transport cart comprises a pile support cradle that comprises multiple pile support rollers, and a drive for rotating one or more of the multiple pile support rollers to move the pile in an axial direction thereof.

Advantageous embodiments of the pile upending and holding system according to the invention, the method according to the invention, and the vessel according to the invention are disclosed in the sub claims and in the description, in which the invention is further illustrated and elucidated on the basis of a number of exemplary embodiments, of which some are shown in the schematic drawing. In the figures, components corresponding in terms or construction and/or function are provided with the same last two digits of the reference numbers.

In the drawing,
Fig. 1 shows a perspective view of a first exemplary embodiment of a pile upending and holding system, with a pile holder in a vertical orientation;
Fig. 2 shows a perspective view of the pile upending and holding system of Fig. 1 with the pile holder in a horizontal orientation;
Fig. 3 shows a perspective view of the pile upending and holding system of Fig. 1 with the pile holder in a horizontal orientation and with jaws of the pile holder in an opened position;
Fig. 4a shows a perspective partial view of a vessel with a pile upending and holding system, with the pile holder in a horizontal orientation and with jaws of the pile holder in an opened position;
Fig. 4b shows a partial close up of fig. 4a;
Fig. 5a shows a perspective partial view of the vessel of Fig. 4, with the pile holder in a vertical orientation, with jaws of the pile holder in a closed position, and holding a pile;
Fig. 5b shows a partial close up of fig. 5a;
Fig. 6 shows a perspective view of a pile transport cart according to the invention;
Fig. 7 shows a frontal view of the pile transport cart of Fig. 6;
Fig. 8 shows a perspective partial view of a vessel with a second exemplary embodiment of a pile upending and holding system according to the invention, with a pile holder in a horizontal orientation and a pile supported above the pile holder by a crane;
Fig. 9 shows a perspective view of the pile upending and holding system of Fig. 8 with the pile holder in a horizontal orientation, the pile holder holding a pile;
Fig. 10 shows a perspective view of the pile upending and holding system of Fig. 8 with the pile holder in a vertical orientation, the pile holder holding a pile;
Fig. 11 shows a perspective view of a vessel with a third exemplary embodiment of a pile upending and holding system according to the invention, with a pile holder similar to the one shown in Fig. 8 in a horizontal orientation;
Fig. 12 shows a perspective view of the vessel of fig. 11 with the pile holder in a vertical orientation;
Fig. 13 shows a perspective view of a second embodiment of a pile transport cart according to the invention;
Fig. 14 shows a side view of the pile transport cart of Fig. 13;
Fig. 15 shows a frontal view of the pile transport cart of Fig. 13 with a pile support cradle in a lifted position;
Fig. 16 shows a frontal view of the pile transport cart of Fig. 13 with a pile support cradle in a lowered position;
Fig. 17 shows a side view of the pile holder of Fig, 11 in a vertical orientation and with a pile foot end support closed; and
Fig. 18 shows a side view of the pile holder of Fig, 11 in a vertical orientation and with the pile foot end support open.

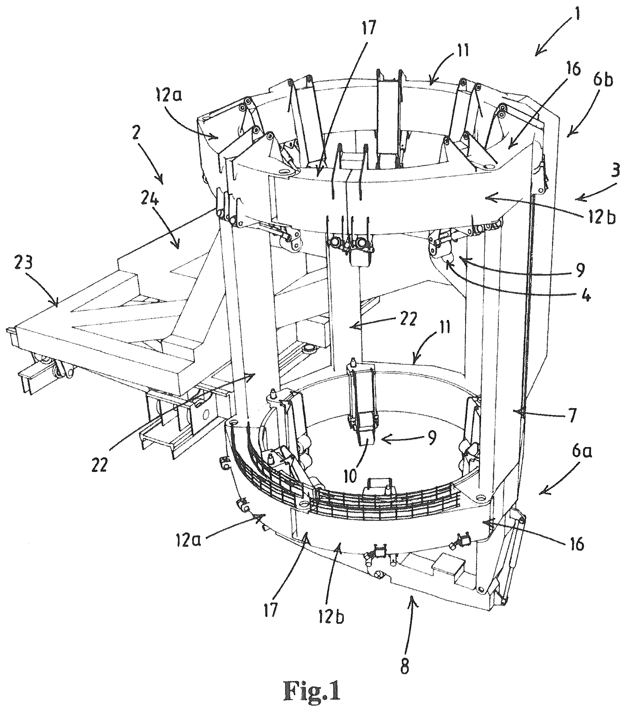

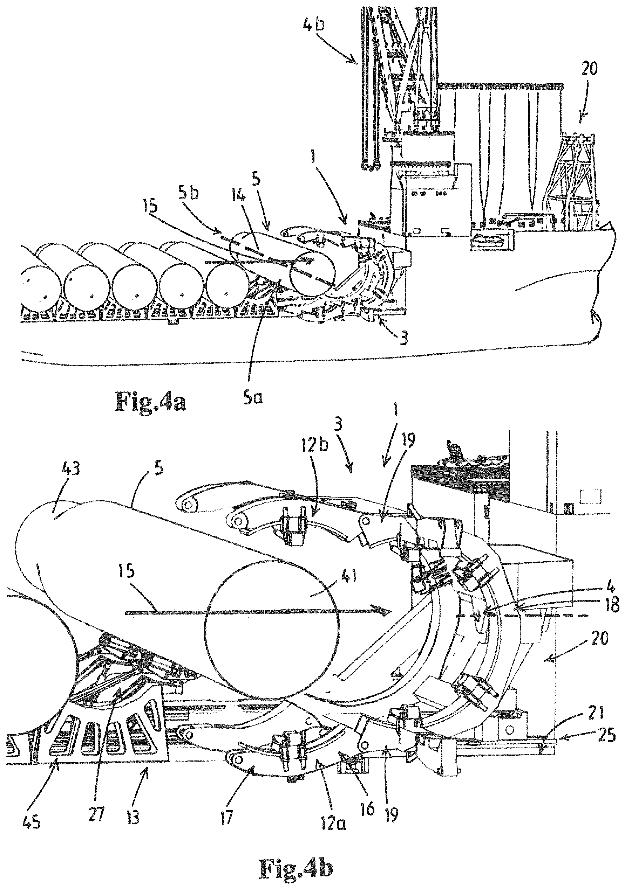

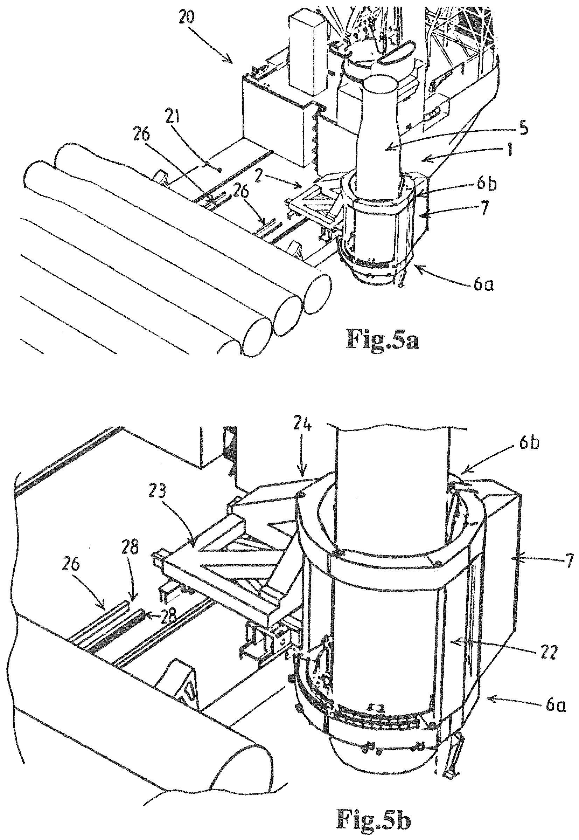

Fig. 1 shows a perspective view of an exemplary embodiment of a pile upending and holding system 1. The system is designed for installation of a pile adapted to support an offshore wind turbine. The exemplary shown is configured to be mounted on a vessel, more in particular on the deck of a vessel, which is shown in Fig. 4 and fig. 5.

The vessel 20 has a longitudinal axis 37 extending between a bow 38 and a stern 39 of the vessel. The vessel 20 comprises a crane for upending a pile held in the pile holder.

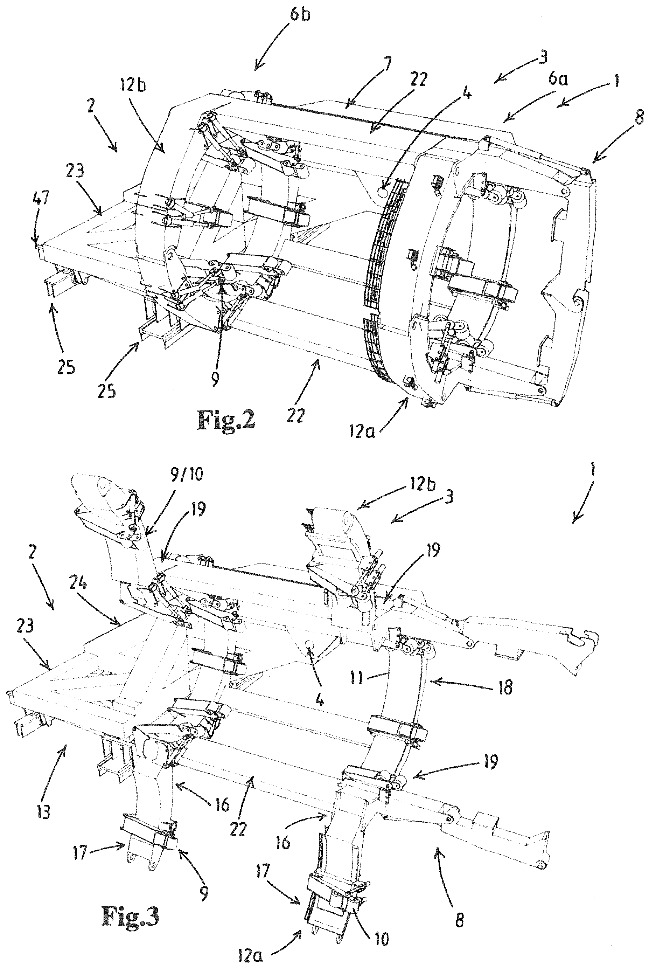

The pile upending and holding system comprises a support assembly 2 and a pile holder 3. The pile holder 3 is tiltable mounted on the support assembly 2. The pile holder 3 is tiltable about a substantially horizontal tilt axis 4 relative to the support assembly 2 between a vertical orientation, shown in Fig. 1 and in Fig. 5, and a horizontal orientation, shown in Fig. 2 and Fig. 4.

When in the horizontal orientation, the pile holder 3 is able to receive and support a pile 5 in a substantially horizontal orientation prior to upending, and a vertical orientation, in which the pile holder 3 is able to hold the pile 5 in a substantially vertical orientation, e.g. for installation of the pile,
0The pile holder comprises a ring, for engaging the pile, a pile holder frame supporting the ring, and a pile foot end support secured to the pile holder frame and/or to the ring and vertically below the ring when the pile holder is in the vertical orientation.

In the exemplary embodiment shown, in addition to the ring 6a, the pile holder 3 comprises a second ring 6b. The second ring 6b is spaced from ring 6a, and is vertically above the ring 6a when the pile holder 3 is in the vertical orientation, see for example Fig. 1. Therefore, the pile holder 3 comprises a lower ring 6a, i.e. the ring, and an upper ring 6b.

The pile holder 3 furthermore comprises a pile foot end support 8. In the exemplary embodiment shown, the pile foot end support 8 is secured to the to the lower ring 6a. The pile foot end support 8 is vertically below the lower ring 6a when the pile holder 3 is in the vertical orientation, for example shown in Fig. 3.

The pile foot end support 8 is configured to engage with a foot end 5a of a pile in order to limit longitudinal movement of the pile, at least during upending of the pile.

In the exemplary embodiment shown, both the lower ring 6a and the upper ring 6b comprise multiple pile engaging devices 9 distributed about the circumference of the lower ring 6a and the upper ring 6b respectively.

In the exemplary embodiment shown, the both the lower ring 6a and the upper ring 6b comprise a ring base 11 mounted to the pile holder frame 7. Furthermore, the lower ring 6a and the upper ring 6b comprise two movable, semi-circular jaws 12. Each jaw 12 is movable between a closed position, for example shown in Fig. 2, and an opened position, for example shown in Fig. 3.

When the jaws 12 are in the closed position, the lower ring 6a and the upper ring 6b each form a closed annulus. When the jaws 12 are in the opened position the lower ring 6a and the upper ring 6b each define a pile transfer opening 13.

Thus, when in the opened position, the jaws allow 12 for the pile 5 to be moved in a lateral direction, i.e. in a direction substantially perpendicular to a longitudinal axis 14 of the pile 5, through the pile transfer opening 13 of the lower ring 6a and the upper ring 6b into a position in the pile holder. In this position of the pile 5 in the pile holder the moveable jaws 12 of the lower ring 6a and the upper ring 6b can be moved into the closed position such that the pile 5 is received in the closed annulus of respectively the lower ring 6a and the upper ring 6b.

The pile holder 3 is embodied with the pile transfer openings 13 of the lower ring 6a and the upper ring 6b facing horizontally sideways, i.e. not upwards or downwards, when the pile holder 3 is in the horizontal orientation.

This configuration of the pile upending system, more in particular of the pile holder, enables moving the pile 5 in horizontal orientation in a substantially horizontal pile transfer direction, indicated with arrow 15, through the pile transfer openings of respectively the lower ring 6a and the upper ring 6b.

The pile holder 3 is embodied so that, when the pile holder is in the horizontal orientation, for example depicted in Fig. 2 and Fig. 3, the ring base 11 of the lower ring 6a and the ring base 11 of the upper ring 6b form a bottom section of the annulus of the lower ring 6a and the upper ring 6b respectively for supporting the pile at the foot end thereof, when the pile is received in the pile holder.

Fig. 2 depicts the pile holder 3 with the jaws 12 of the lower ring 6a and the upper ring 6b in the closed position, and Fig. 3 depicts the jaws in the open position. In the exemplary embodiment shown, the lower ring 6a and the upper ring 6b are substantially similar in configuration. Both the lower ring 6a and the upper ring 6b comprise two jaws 12, i.e. a first jaw 12a and a second jaw 12b, wherein the first jaw 6a is located in a vertical direction below the second jaw 12b, when the pile holder 3 is in the horizontal orientation.

Furthermore, each of the jaws 12a, 12b extends between an inner end and an outer end, and each jaw 12a, 12b is at the inner end pivotable connected to a respective pivot part of the respective ring base, to pivot about a jaw pivot axis between the closed position and the opened position.

Both the lower ring 6a and the upper ring 6b comprise the ring base 11, the first jaw 12a and the second jaw 12b. Each of the jaws 12 extends between an inner end 16 and outer end 19. The ring base 11 extends between the inner end 18 of the first jaw 16 and the inner end of the second jaw 17.

As can be clearly seen in Fig. 3, the first jaw 12a is pivotably connected with its inner end to the ring base 11 to pivot about a first jaw pivot axis, and the second jaw 12b is pivotably connected with its inner end to ring base to pivot about a second jaw pivot axis. Both the first jaw 12a and the second jaw 12b are thus pivotable between the respective closed position as shown in Fig. 2 and the open position as shown in Fig. 3.

In this embodiment, the first jaw 12a and second jaw 12b are similar in size, of both the lower ring 6a and the upper ring 6b. Furthermore, in the embodiment shown, the ring base 11 of both the lower ring 16a and the upper ring 16 is larger than the two jaws of the respective rings combined, i.e. the ring base extends along a more than 185 degrees long arc shaped trajectory, and extends along a bottom segment of both the bottom ring and the top ring.

Thus, in the embodiment shown, the bottom ring 16a and the upper ring 16b are embodied so that, when the pile holder 3 is in the horizontal orientation, the ring base 11 of the lower ring 6a and the ring base 11 of the upper ring 6b form a bottom section of the annulus of the respective rings, for supporting the pile when received in the pile holder.

Fig. 2 clearly depicts that when the first jaw 12a and the second jaw 12b are in the closed position, the outer ends of the first and second jaw join up, even engage each other, and preferably are connected to each other, e.g. using a locking mechanism to lock the first jaw and the second jaw in their closed positions. Although locking the jaws 12a, 12b in their closed positions can be achieved by connecting their outer ends to each other, it is alternatively also envisaged that the jaws are locked in their closed positions by a locking mechanism without being connected to each other.

When the first jaw 12a and the second jaw 12b of the lower ring 6a and the upper ring 6b are in the closed position, the pile holder 1 defines, more in particular the lower ring 6a and the upper ring 6b of the pile holder define a pile passage for the pile 1. In Fig. 5 the pile 1 is positioned in the pile passage, which pile may alternatively be described as being positioned in the pile holder 1. Being positioned in the pile holder 1 thus implies that the jaws 12a and 12b are in the closed position to form the pile passage.

When the jaws 12a, 12b are in the open position, the pile 5 is allowed to move through the transfer openings 13 of the lower ring 6a and the upper ring 6b. It is noted that the transfer openings 13 face horizontally sideways, i.e. not upwards or downwards, when the pile holder 3 is in the horizontal orientation. The transfer openings 13 thus enable moving the pile 1 in horizontal orientation in a substantially horizontal pile transfer direction 15 through the pile transfer openings 13 and into the pile holder 1, which is shown in Fig. 4.

In the exemplary embodiment shown, the ring base of 11 of the lower ring 6a and the ring base 11 of the upper ring 6b are both C-shaped. The ring bases each have a middle section 18 that extends between two end sections 19. It is clear from for example Fig. 3 and Fig. 4 that, when the pile holder 3 is in the horizontal orientation, the end sections 19 extend along a lowest section and an upper most section of the annulus of the lower ring 6a and of the upper ring 6b. A pile received in the rings of the pile holder, is held between the end sections 19 of the ring base 11, which end sections are located on opposite sides of the pile.

Furthermore, in the exemplary embodiment shown, the pile holder frame 7 comprises longitudinal frame members 22 that extend between the end sections 19 of the ring base of the lower ring and the end sections of the ring base of the upper ring. The frame members 22 are parallel to a longitudinal axis of a pile held in the pile holder. Thus, the pile holder frame 7 connects the lower ring 6a with the upper ring 6b on opposite sides of the annulus of the respective rings, which provides a pile holder with a lower ring and an upper ring, side facing transfer openings, and a pile holder frame with high structural rigidity for holding a pile during the upending process.

Each pile engaging device 9 is adapted to engage an exterior of the pile 3, when the pile is extending through the lower ring and the upper ring. The pile engaging devices 9 are configured to engage with an outer surface of the pile 5 when the pile is positioned in the pile holder 3. To reduce friction between the pile engaging devices 9 and the pile 5 during lowering of the pile relative to the pile holder, i.e. when the pile holder is in the vertical orientation, the pile engaging devices 9 are each provided with two pile guiding rollers 10.

In an embodiment, the ring base of the ring is at the bottom section provided with at least one pile engaging device, for engaging and supporting the pile when received in the pile holder. As already discussed above, in the embodiment shown, both the lower ring 6a and an upper ring 6b comprise a C-shaped ring base 11, i.e. a ring base having a middle section 18, and having end sections 19 on opposite sides of a pile held in the respective ring.

Furthermore, in the exemplary embodiment shown, the upper ring 6b comprises pile engaging devices 9 that are mounted on the ring base 11 on opposite sides of a vertical plane passing through the apex of the annulus of the respective ring, when the pile holder is in the horizontal orientation.

The ring base of the upper ring 6b is at the bottom section, and in the exemplary embodiment shown at the top section as well, provided with two pile engaging devices 9, for engaging and supporting the pile when received in the pile holder.

Therefore, the ring base 11 of the upper ring 6b is provided with six pile engaging devices 9, while the ring base 11 of the lower ring is provided with four pile engaging devices 9. For both the upper ring and the lower ring, each of the jaws is provided with a single pile engaging devices 9.

Thus, when the pile holder 3 is in the horizontal orientation, two pile engaging devices 9, each mounted on the ring base 11 of the upper ring 6b, are positioned to support at least part of the weight of the pile. Because these two pile engaging devices are located on opposite sides of a vertical plane that passes through the apex of the annulus of the ring, they are provided on opposite sides of a vertical plane that comprises a longitudinal axis of a pile held in the pile holder. These pile engaging devices 9 of the upper ring 6b thus enable a stable support of the pile.

In the embodiment shown, the lower ring 6a is provided with a pile engaging device 9 at the apex and with a pile engaging device 9 at the bottom of respectively the top end section 19 and the bottom end section 19 of the ring base 11. These pile engaging devices 9 are located on a vertical line intersecting with the center of the annulus, and thus intersecting with the apex and the bottom of the annulus of the upper ring. Thus, even though these pile engaging device located at the bottom of the annulus may support at least part of the pile held in the pile holder, this pile engaging device is unable to provide the stable support provided by the pile engaging devices of the upper ring.

Furthermore, in the embodiment shown, the pile engaging devices of the ring are movable over a corresponding arc segment of a circle, relative to the ring, so as to allow for adaptation of the angular position of the pile engaging devices relative to the ring.

In the exemplary embodiment shown, the pile foot end support 8 comprises two pivotal arms 8a,8b that are movable between an operative position, shown in Fig. 1 and fig. 2. When the pile holder is in the vertical orientation, the pivotal arms 8a,8b extend underneath the pile foot end of a pile held in the pile holder. In the opened position, shown in Fig. 3, the two pivotal 8a,8b arms are cleared from the pile foot end of a pile held in the pile holder 1.

In the exemplary embodiment shown, the jaws of the pile holder are hydraulically operated. Also, the pile holder is provided with a hydraulic drive configured to tilt the pile holder between the horizontal orientation and the vertical orientation. It is noted that drive is in particular useful for moving the pile holder when it does not hold a pile, for example after a pile has been driven into the seafloor, and the pile holder has disengaged said pile.

During the upending, the top end of the pile is lifted by the crane. The crane thus pivots the pile, while the pile holder supports the pile. The pile holder tilts with the pile. This may be passive, in which case the pile holder is tilted by the movement of the pile, or active, in which the drive pivots the pile holder such that it keeps up with the tilting movement of the pile.

In the embodiment shown, the pile holder frame supports a hydraulic system for actuating the jaws and the pile engaging devices of the lower in and the upper ring. The hydraulic system is mounted on the pile holder, more in particular on part of the pile holder frame, and pivots with the pile holder during the upending process.

In the exemplary embodiment shown, the support assembly 2 comprises a base frame 23 and a support frame 24, mounted on the base frame 23. The support frame 24 tiltable supports the pile holder 3 such that the tilt axis 4 is spaced from the base frame 23 and such that, when the base frame 23 is mounted on a vessel, the tilt axis 4 is located outside a contour of that vessel, when seen in a top view. Providing the pile holder with a tilt axis located outside the contour of the vessel allows for the pile holder to both be used in upending and for holding the pile while it is driven into the sea floor at a pile installation location.

In the exemplary embodiment shown, when the pile holder 3 is in the horizontal orientation, the tilt axis 4 intersects with the annulus of the lower ring 6a and the annulus of the upper ring 6b, when seen in a direction parallel to a central axis of said annuli.

Furthermore, when the pile holder 3 is in the vertical orientation, the tilt axis 4 of the pile holder 3 is located vertically between the lower ring 6a and the upper ring 6b, i.e. above the lower ring and below the upper ring.

Also, the tilt axis 4 of the pile holder 3 is parallel to the substantially horizontal pile transfer direction
In the exemplary embodiment shown, the support assembly 2 is configured to provide compensation for wave-induced motion of the vessel to maintain a predetermined X-Y location of the pile holder independent of the wave-induced motion of the vessel.

Moving the pile holder relative to the vessel, to maintain a predetermined X-Y position, is beneficial when holding a pile, in an upended position, from a floating vessel at a pile installation location. The support assembly can thus hold the pile in the upright position while the vessel is moved relative to said position by the sea.

In this context it is to be noted that modern ships are configured to maintain a predetermined position. however, it may be quite difficult to exactly maintain that positon, in particular in case of string waves.

Providing the pile upending and holding system with a support assembly that is configured to keep the pile holder at a predetermined X-Y position thus enlarges the operational window of the vessel on which the pile upending and holding system is mounted.

The support assembly 2 comprises two first rails 25 extending in a longitudinal direction, and a positioning frame 26 movably supported on the two first rails 25 in said longitudinal direction. The positioning frame is furthermore provided with one or more second rails 27 extending in a transverse direction, i.e. transverse to the longitudinal direction. The base frame 23 and the support frame 24 are movably supported on the two second rails 27 in said transverse direction, while the pile holder is tiltable supported by the support frame about the tilt axis. Thus, the support assembly 2 is configured to move the base frame 23 and the support frame 24, and therefore the pile holder, in both the longitudinal direction and perpendicular to the longitudinal direction.

In the exemplary embodiment shown, the pile holder comprises a lower ring 6a and an upper ring 6b for holding the pile. In an alternative embodiment, instead of the upper ring or in addition to the upper ring, the pile holder comprises a pile support structure, the pile support structure being configured to engage a pile that is held in the ring, and provide the pile with additional support during upending and/or while the pile is being lowered towards the seafloor. For example, in addition to the lower ring and the upper ring, a U-shaped pile support structure may be provided between the lower ring and the upper ring, wherein the support structure comprise two support arms, extending substantially parallel to the end sections of the ring base of the lower ring and the end sections of the ring base of the upper ring. Such a pile support structure comprises a pile transfer opening that faces the same direction as the pile transfer openings of the lower ring and the upper ring. However, the support structure is not provided with one or more jaws to close that pile transfer opening. Such a pile support structure is able to provide a pile held in the lower ring and upper ring with additional support.

In a further embodiment, the support structure is provided with pile engaging devices, preferably pile engaging devices similar or identical with pile engaging devices provided on the lower ring and/or upper ring.

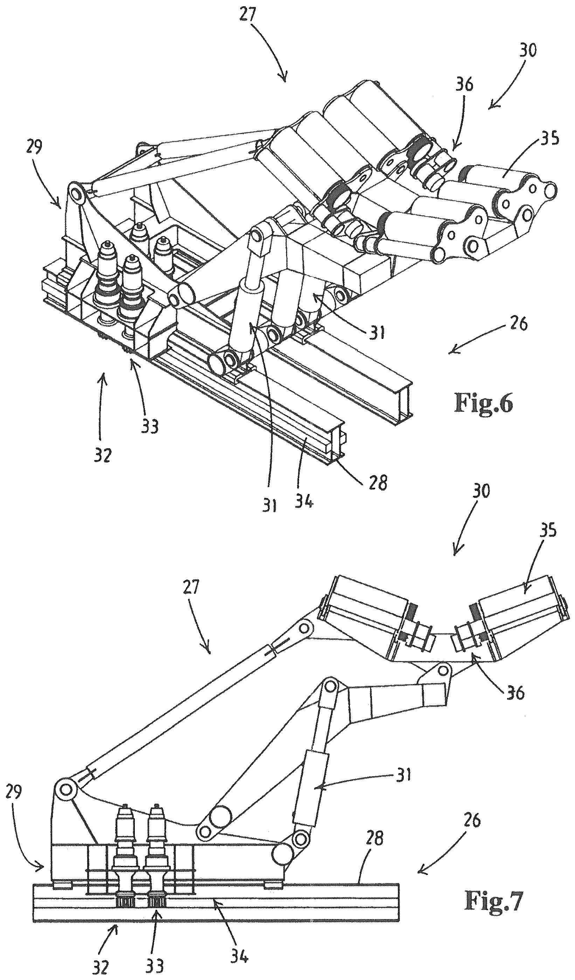

The particular embodiment shown, the pile upending and holding system 1 further comprises a transport track 26 and two pile transport carts 27. A pile transport cart 27 is shown in isolation in Fig. 6 and fig. 7. The pile transport track comprises two skid rails 28, that extend between a pile storage location and the pile holder.

The transport carts 27 are moveable supported by the transport track 26, for transporting the pile 5, in the horizontal orientation, along the transport track 26 in the substantially horizontal pile transfer direction 15, through the pile transfer opening 13 of the lower ring and the upper ring, and into the pile holder 3.

In Fig. 4 the pile 1 is supported by two pile transport carts 27 while it is being transported, more in particular while it is being moved in the pile transfer direction, into the pile holder 1.

In the particular embodiment shown, the pile transport carts 27 are not only configured to transport a pile in the pile transfer direction, but are also configured to lift the pile, while the pile is in a horizontal orientation, in a substantially vertical direction out of a pile storage cradle.

In the embodiment shown, the pile storage cradles are mounted on the deck of the vessel, deck on which the pile upending and holding system is also mounted, and each comprise two pile supports at opposite sides of the transport track for supporting a pile, in a horizontal orientation, at the feed end of the pile and for supporting the pile at the top end thereof.

The pile transport carts 27 comprises a four rod mechanism, with a base 29 moveable mounted on the transport track 26, a pile support cradle 30 for supporting the pile, and at least two support arms 31 extending between the base 29 and the pile support cradle 30.

The base 29, the pile support cradle 30 and the two support arms 31 form a four rod mechanism, with the base movable mounted on the transport track and the pile support cradle being movable in the substantially vertical direction. The four rod mechanism makes that the pile support cradle is held in the upright position while being lifted or lowered.

The transport cart is provided with an actuator for lifting and lowering the cradle relative to the base of the transport cart. In the exemplary embodiment shown, the transport cart comprises an actuator 31 in the form of a hydraulic cylinder.

Furthermore, a drive is provided for moving the transport cart along the transport track. In the exemplary embodiment shown, each transport cart 27 is provided with multiple drives 32, each drive comprising a motor that drives cam 33, which cam 33 engages a cam track 34 extending along the transport track 26.

Alternative drives can be used with the transport carts. For example, the transport track and the transport carts can be configured to skid the transport cart along the transport track, using hydraulic cylinders to pull the cart along the track.

In the exemplary embodiment shown pile transport carts 27 are furthermore configured to move the pile 5 in an axial direction, i.e. along a longitudinal axis of the pile. The pile support cradles 30 of the transport arts each comprises multiple pile support rollers 35, and a drive 36 for rotating the multiple pile support rollers, and thus move the pile in an axial direction thereof. Thus, once the pile is lifted from the pile supports, the pile can be moved along the transport track by moving the transport carts along the transport track, and the pile can be moved in an axial direction, i.e. along the longitudinal axis of the pile, by driving the pile support rollers.

Thus, the pile transport and positioning system is configured to transport and positon foundation piles along the deck of a vessel between a pile storage location and a pile holder, and to position the pile relative to the pile holder.

By providing a pile transport and positioning system, no crane needs to be used for moving the pile. The system thus allows for moving the pile closely along the deck, which keeps the centre of gravity of the pile close to the deck. Furthermore, the system allows for a better control of the pile during transport. For example, a pile lifted by a crane is probe to swinging movement. Also, the deck mounted system allows for a more precise, and better controlled positioning of the pile relative to a pile holder. This is in particular beneficial when handling foundation piles, which due to their large size and heavy weight, are difficult to control, in particular when supported by wires.

The vessel 20, provided with a pile upending and holding system 1 allows for performing a method. In the exemplary embodiment shown, the vessel 20 is provided with multiple pile storage cradles, in the embodiment shown comprising pile supports on opposite sides of the pile transport track, for each supporting a pile in a horizontal orientation and substantially perpendicular to a longitudinal axis of the vessel.

The vessel 20 shown in Fig. 4 and Fig. 5 enables a method for upending and installation of the pile 5 in the seabed. The method comprises, with the vessel 20 in floating condition:
a. transporting the pile 5 in a horizontal orientation to an offshore installation site;
b. positioning the pile holder 3 in the horizontal orientation and moving the jaws 12 of the lower ring 6a and the upper ring 6b, into the opened position, such that the pile transfer openings 13 are facing sideways;
c. moving the pile 5 in horizontal orientation in a substantially horizontal pile transfer direction 15 through the pile transfer openings 13, and placing the pile 5 in horizontal orientation with a lower end portion 41 thereof on the ring base 11 of the lower ring 6a and the ring base 11 of the upper ring 6b;
d. moving the jaws 12 of the lower ring 3a and the upper ring 6b, into the closed position, thus receiving the pile 5 in the closed annuli of the rings 6a,6b;
e. upending the pile 5 into a vertical orientation by means of lifting an upper end portion 43 of the pile 5, so that the pile 8, held, at the lower end portion 41 thereof, in the pile holder, tilts about the horizontal tilt axis 4, and wherein the pile foot end support 8 limits longitudinal movement of the pile 5 in a downward direction, during the upending of the pile 5,
f. disengaging the pile foot end support 8 from the lower end portion 41 of the pile 5; and
g. lowering the pile 5 into the water while being held and guided by pile holder, more in particular by the pile engaging devices 9 of the pile holder 3.

In an embodiment, the method furthermore comprises providing compensation for wave-induced motion of the vessel 20 with the support assembly 2 to maintain a predetermined X-Y location of the pile holder 3 independent of the wave-induced motion of the vessel 20 at least in step g.

In an embodiment, the method furthermore comprises, following step g, and after driving the pile into the seafloor, optionally: moving the pile engagement devices away from the pile, moving the jaws 12 of the lower ring 6a and upper ring 6b, into the opened position, and moving the pile holder 3 relative to the pile 5 in a direction parallel to a longitudinal axis 37 of the vessel 20.

In an embodiment, the pile holder 3 is moved relative to the pile 5 by the pile support assembly 2, for example by a support assembly that is configured to provide compensation for wave-induced motion of the vessel to maintain a predetermined X-Y location of the pile holder independent of the wave-induced motion of the vessel. In addition or as an alternative, the vessel 20 may be moved relative to the pile 5 to move the pile through the pile transfer openings 13 and out of the pile holder 3.

In an embodiment, the pile 5, when moved in the substantial horizontal pile transfer direction 15 into the pile holder 3, is moved in a direction substantially perpendicular to a longitudinal axis of the pile 5.

In an embodiment, the method furthermore comprises, prior to step c, lifting the pile 5 in a horizontal orientation from the pile storage cradle 45.

In an embodiment, step c or d furthermore comprises moving the pile 5 in an axial direction.

In an embodiment, step d furthermore comprises:
- after closing the jaws 12, engaging the pile 5 with the pile engaging devices 9 of the lower ring 6a and the upper ring 6b, and subsequently securing the pile engaging devices 9 in that position.

In an embodiment, step e furthermore comprises:
- securing a hoisting wire of the crane 46 to a top end 5b of the pile 5, the top end 5b being and end of the pile that is opposite the foot end 5a, which foot end 5a is received in the pile holder 3;
- tensioning the hoisting wire without substantially lifting the pile 5, and thus compensating for e.g. flexing of a boom of the crane and/or elongation of the hoisting wire of the crane when being fully loaded, wait at least 5 seconds prior to starting the up ending process;
- optionally, remove a pile storage cradle, other than the pile holder, from below the pile.

In an embodiment, step e furthermore comprises
- optionally, actively damping movement of the pile 5 while the pile 5 is moved into the upended position, to prevent the pile 5 from significantly overshooting the upended position;
- once in the pile 5 is in the upended position, lifting the pile 5 upwards and removing the pile foot end support 8;
- lowering the pile 5 towards the sea floor.

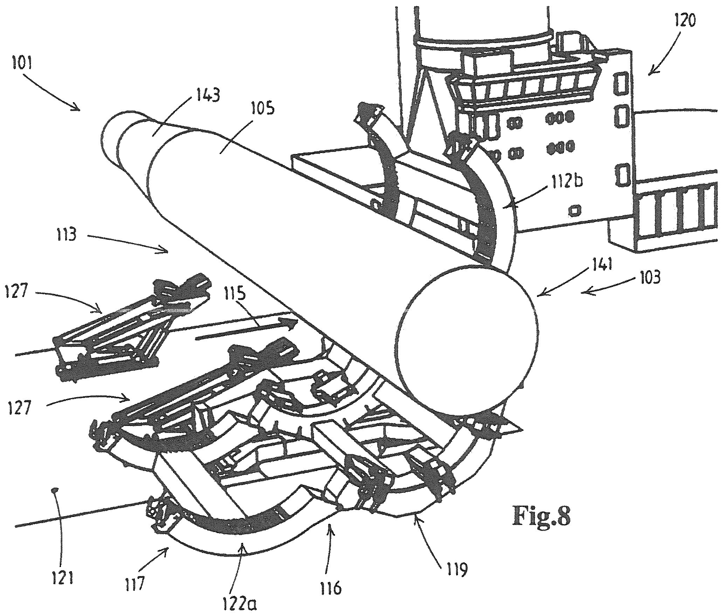

The invention provides a pile upending and holding system having a wide pile transfer opening. Such an embodiment of a upending and holding system is depicted in figures 8-10.

Figure 8 shows a perspective partial view of a vessel 120 with a further pile upending and holding system 101 according to the invention, with a pile holder 103 in a horizontal orientation and a pile 105 supported above the pile holder 103 by a crane 146.

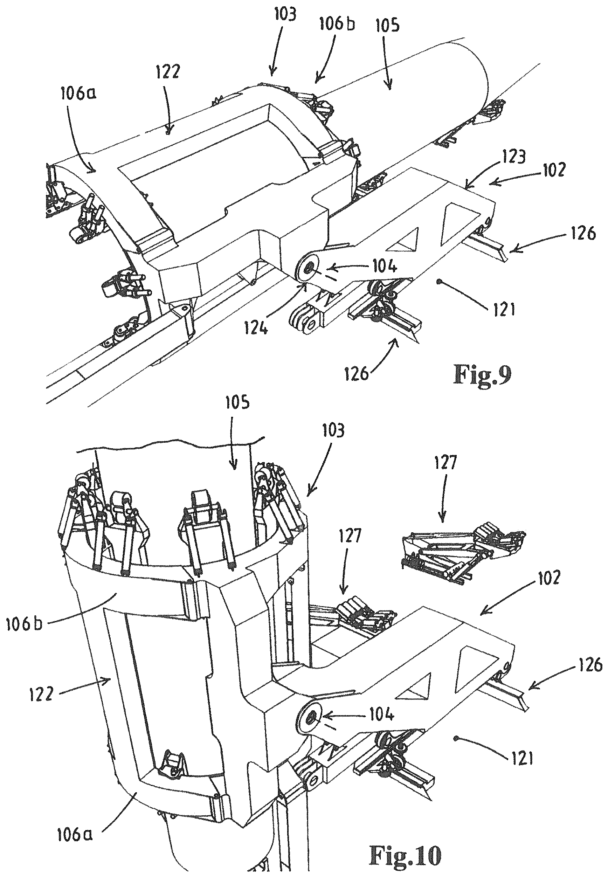

Figure 9 shows a perspective view of the pile upending and holding system 101 with the pile holder 103 in a horizontal orientation, the pile holder 103 holding the pile105.

Figure 10 shows a perspective view of the pile upending and holding system 101 with the pile holder 103 in a vertical orientation, the pile holder 103 holding the pile 105 in an upended position.

The second embodiment of a pile upending and holding system 101 according to the invention is shares the main feature of the pile upending and holding system shown in figures 1-7, i.e. the pile holder being configured to enable loading a pile in a horizontal orientation in a substantially horizontal pile transfer direction into the pile holder, as discussed above and for example shown in figure 4 and 5.

According to the invention the pile holder 103 comprises a ring 106a, for engaging the pile 105, a pile holder frame 107 supporting the ring 106a, and a pile foot end support 108 secured to the pile holder frame 107 and/or to the ring 106a and vertically below the ring 106a when the pile holder 103 is in the vertical orientation.

In the particular embodiment of the pile upending and holding system 101 shown in figures 8-10, in addition to a first ring 106a, the pile holder 103 comprises a second ring 106b. The second ring 106b is spaced from ring 106a, and is vertically above the ring 106a when the pile holder 103 is in the vertical orientation, see for example Fig. 10. Therefore, the pile holder 103 comprises a lower ring 106a, i.e. the ring, and an upper ring 106b.

Similar to the first embodiment, shown in figures 1-7, the second exemplary embodiment, shown in figures 8-10, the first ring 106a and the second ring 106b have a similar embodiment. For example, both the lower ring 106a and the upper ring 106b comprise multiple pile engaging devices 109 distributed about the circumference of the lower ring 106a and the upper ring 106b respectively. Also, both the lower ring 106a and the upper ring 106b have a pile transfer opening 113, and each have a first jaw 112a and a second jaw 112b for in a closed position providing the respective rings with a closed annulus.

In the particular embodiment of the pile upending and holding system 101 shown in figures 8-10, the system further comprises a pile transport and positioning system as discussed above and shown in for example figures 4-7. The pile transport and positioning system comprises a transport track 126 with skid rails 128 and transport carts 127, and is configured to transport a pile, in the horizontal orientation, along the transport track in the substantially horizontal pile transfer direction, through a pile transfer opening of a pile holder.

The second exemplary embodiment of the pile upending and holding system 101 differs from the first in that the pile transfer opening 113 is wider.

Both the first ring 106a and the second ring 106b comprises a ring base 111, mounted to the pile holder frame 107. Similar to the first embodiment, for each ring the ring base 111 extends along a section of the circumference of the respective ring, between a first end 140 and a second end 142. The ring base 111 defines the pile transfer opening 113 between the first end 140 and second end 142, and is at the first end 140 and at the second end 142 provided with a moveable jaw 12, in the embodiment shown a semi-circular jaw.

Each of the jaws 112 is movable between a closed position and an opened position. In the closed position the rings 112 form a closed annulus. In the opened position of the jaws 112, the pile transfer opening 113 is open to allow for a pile to be moved in a lateral direction, i.e. in a direction substantially perpendicular to a longitudinal axis of the pile, through the pile transfer opening into a position in the pile holder, in which position of the pile the jaws of the rings can be moved into the closed position such that the pile is received in the closed annulus of the respective rings.

According to the claimed invention, the pile transfer opening 113 being a wide opening implies that the section, along which the ring base 111 extends along the circumference of the rings 106, is long enough, and thus the pile transfer opening 113 is wide enough, to enable a pile to be moved in a first lateral pile transfer direction and in a second lateral pile transfer direction through the pile transfer opening, wherein the first lateral pile transfer direction is at an angle to the second lateral pile transfer direction. in the particular embodiment shown the first pile transfer direction and the second pile transfer direction enclose an angle of 90 degrees.

Furthermore, the pile holder 103 is embodied with the pile transfer opening 113 of the first ring 106a and the second ring 106b both facing horizontally sideways and at least partially upwards, see for example figure 8. Thus, when the pile holder 103 is in the horizontal orientation, the first lateral pile transfer direction is substantially horizontal and the second lateral pile transfer direction is substantially vertical, see for example figure 8.

When the pile holder 103 is in the horizontal orientation, the pile transfer openings 113 allow for moving the pile in a horizontal orientation in the substantially horizontal pile transfer direction through the pile transfer opening, similar to the situation shown in figure 5.

Furthermore, when the pile holder 103 is in the vertical orientation, see for example figure 10, the pile transfer opening, see for example figure 8, allows for moving the pile away from the vessel in the second lateral pile transfer direction through the pile transfer opening.

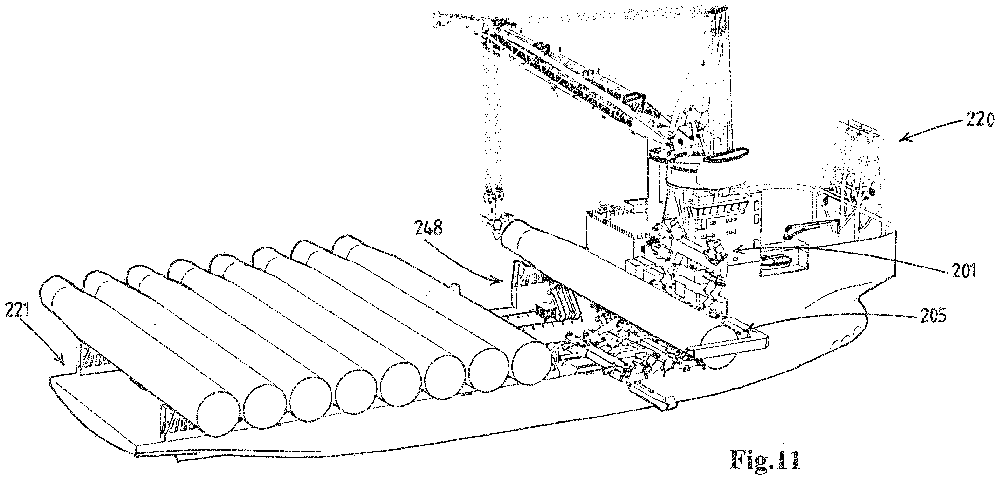

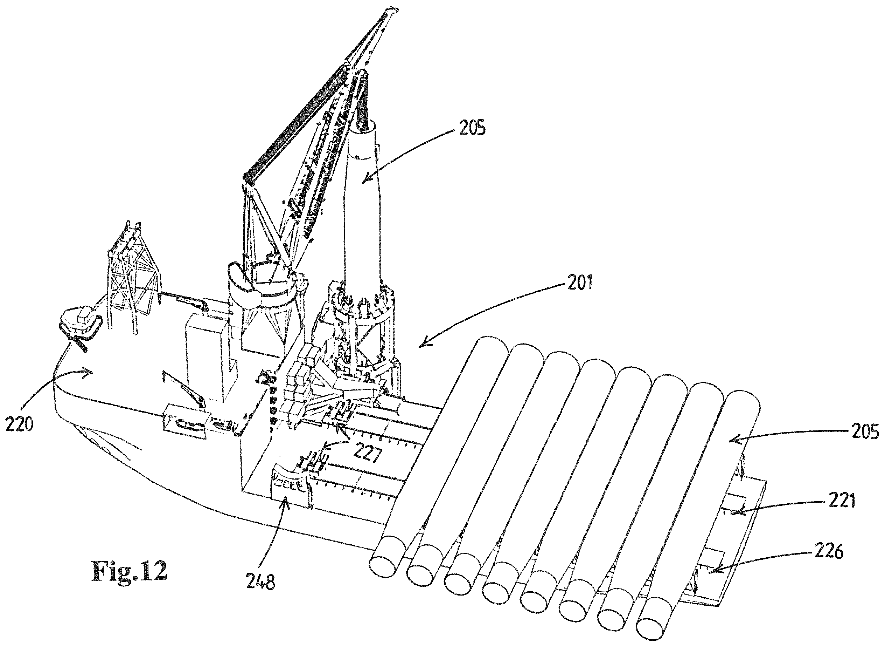

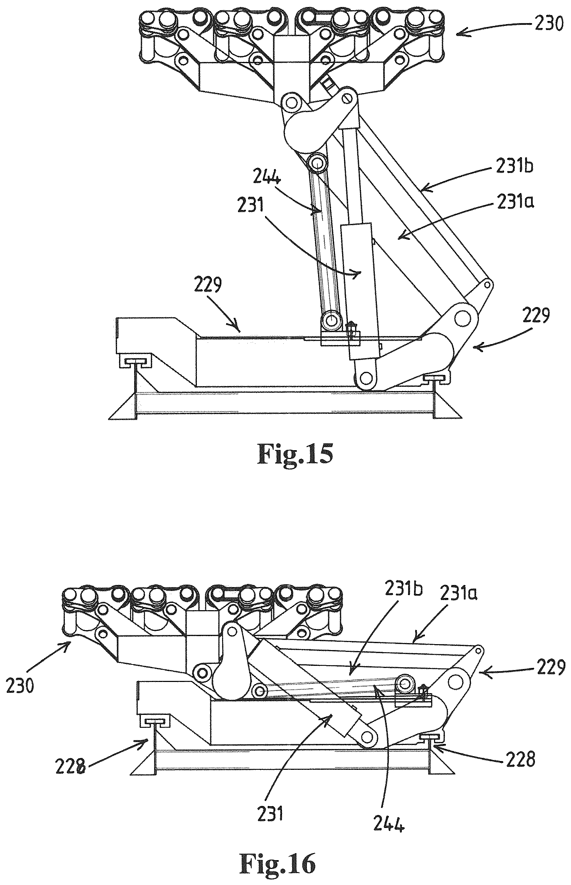

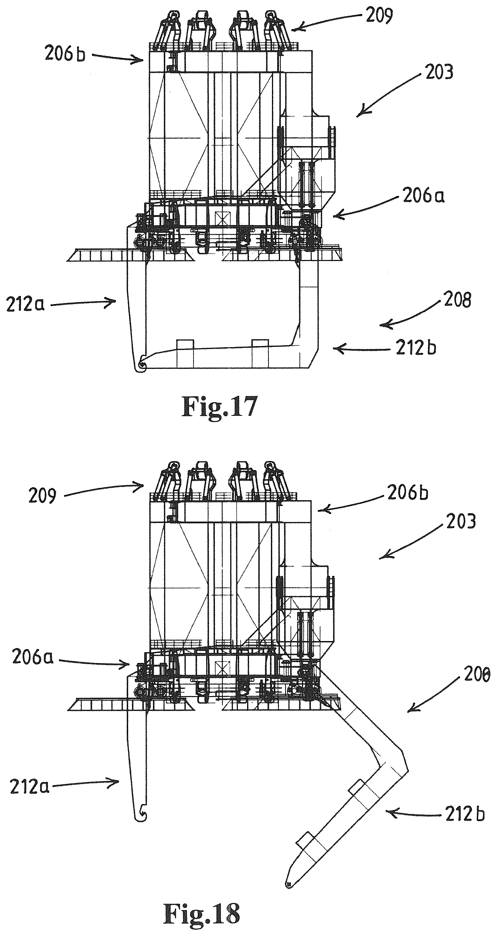

Figure 11 shows a perspective view of a vessel 220 with a third exemplary embodiment of a pile upending and holding system 201 according to the invention. The pile holder system 201 comprises a pile holder 203 similar to the one shown in Figure 8. in figure 11, the pile holder 203 is depicted in a horizontal orientation. In Figure 12 the pile holder is shown in a vertical orientation. Figure 16 and figure 17 show a side view of the pile holder 203.

The pile upending and holding system 201 is mounted on a deck 221 of a vessel 220, for installation of a pile 205 adapted to support an offshore wind turbine.

The pile upending and holding system comprises a support assembly 202 and the pile holder 203.

The support assembly 202 is configured to be mounted on the vessel 220, more in particular on the deck 221 of the vessel 220.

The pile holder 203 tiltable mounted on the support assembly 202. The pile holder 203 is tiltable about a substantially horizontal tilt axis 204 relative to the support assembly 202 between a horizontal orientation, in which the pile holder 203 is able to receive and support a pile 205 in a substantially horizontal orientation prior to upending, depicted in Figure 11, and a vertical orientation, in which the pile holder 203 is able to hold a pile 205 in a substantially vertical orientation, for installation of the pile 205, depicted in Figure 12.

The pile holder 203 comprises:
- a lower ring 206a and an upper ring 206b, for engaging the pile 205,
- a pile holder frame 207 supporting the lower ring 206a and the upper ring 206b, and
- a pile foot end support 208, the pile foot end support 208 vertically below the lower ring 206a when the pile holder 203 is in the vertical orientation.

The upper ring 206b is spaced from the lower ring 206a and the upper ring 206b is vertically above the lower ring 206a when the pile holder 203 is in the vertical orientation.

The pile foot end support 208 is configured to engage with the pile foot end 205 of the pile 205 in order to limit longitudinal movement of the pile, at least during upending of the pile.

The lower ring 206a and the upper ring 206b comprises multiple pile engaging devices 209 distributed about the circumference of the respective rings, each pile engaging device being adapted to engage an exterior of the pile 205 extending through the rings.

The lower ring 206a and the upper ring 206b each comprises a ring base 211, mounted to the pile holder frame 207, and wherein the ring base 211 extends along a section of the circumference of the lower ring 206a and the upper ring 206b respectively, between a first end and a second end, and the respective ring base defines a pile transfer opening between the first and second end, and wherein the respective ring base 211 is at the first end and/or at the second end provided with a moveable jaw 212, in the particular embodiment shown a semi-circular jaw.

The jaws 212 are movable between:
- a closed position, wherein the ring forms a closed annulus, and
- an opened position, wherein the pile transfer opening is open to allow for a pile to be moved in a lateral direction, i.e. in a direction substantially perpendicular to a longitudinal axis of the pile, through the pile transfer opening into a position in the pile holder, in which position of the pile the one or more moveable jaws of the ring can be moved into the closed position such that the pile is received in the closed annulus of the ring.

The pile foot end support 208is secured to the pile holder frame 207 and to the lower ring 206a, in the embodiment shown to one of the two movable yaws 212, of the lower ring 206a.

The section, along which the ring bases 211 extend along the circumference of respectively the lower ring 206a and the upper ring 206b, is long enough, and thus the pile transfer opening 213 is wide enough, to enable the pile 205 to be moved in a first lateral pile transfer direction and in a second lateral pile transfer direction through the pile transfer opening, and wherein the first lateral pile transfer direction is at an angle to the second lateral pile transfer direction.

The pile holder 203 is embodied with the pile transfer openings of the respective lower ring 206a and the upper ring 206b facing horizontally sideways and upwards. When the pile holder is in the horizontal orientation, the first lateral pile transfer direction is substantially horizontal and the second lateral pile transfer direction is substantially vertical.

When the pile holder 203 is in the horizontal orientation, the pile transfer openings 213 allow for moving the pile 205 in a horizontal orientation in the substantially horizontal pile transfer direction through the pile transfer openings, e.g. for transferring a pile into or out of the pile holder using a deck mounted pile transport system.

Furthermore, when the pile holder 203 is in the horizontal orientation, the pile transfer openings 213 allow for moving the pile 205 in a horizontal orientation in the substantially vertical pile transfer direction through the pile transfer opening, e.g. for transferring a pile into or out of the pile holder using a crane.

The main difference between the pile holder 103 shown in Figure 8 is the pile holder 203 shown in Figure 11 is that the latter is provided with an alternative pile foot end support 208. The pile holder 203 is shown in more detail in Figure 16, in which the pile foot end support 208 is closed, and Figure 17, in which the pile foot end support 208 is open. In contrast with the pile foot end support 103 shown in Figure 8, this pile foot end support 208 is asymmetrical. The pile foot end support 208 comprises an I-shaped arm 212a, hingable connected to a yaw of a lower ring of the pile holder 203, and an L-shaped arm 212b, hingable connected to a frame of the pile holder 203.

To close the pile foot end support 203, the I-shaped arm 212a and the L-shaped arm 212b are connected at a side of the pile holder 203. In contrast, the first arm 112a and the second arm 112b are to be connected at the center of the pile holder 203. The same type of pile foot support is support is depicted in figure 1 and Figure 2.

The pile upending and holding system 201 shown in Figure 11 and in Figure 12 further comprises a pile top end support 248 for, when the pile holder 203 is in the horizontal orientation, supporting a top end of the pile 205 that is located, in a horizontal orientation, in the pile holder.

The pile support 248 comprises a foot section 248a, mounted on the deck 221 of the vessel 20, and a support section 248b, configured to engage the top end of the pile 205. The support section 248b of the pile support 248 is movable relative to the foot section 248a such that the top support section 248b can be moved in a vertical direction, e.g. to adjust for pile having a different diameter.

The pile upending and holding system 201 further comprises a pile transport and positioning system. The pile transport and positioning system comprises a transport track 226 and two pile transport carts 227.

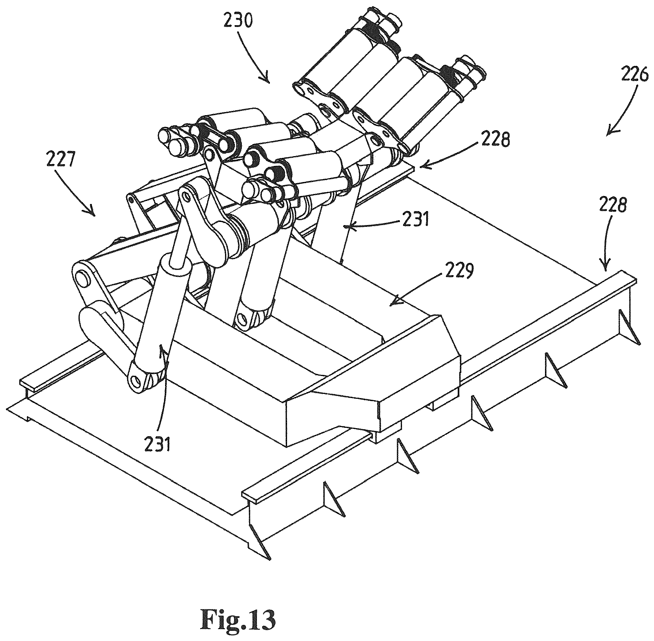

Figure 13 shows a perspective view of a second embodiment of a pile transport cart 227.

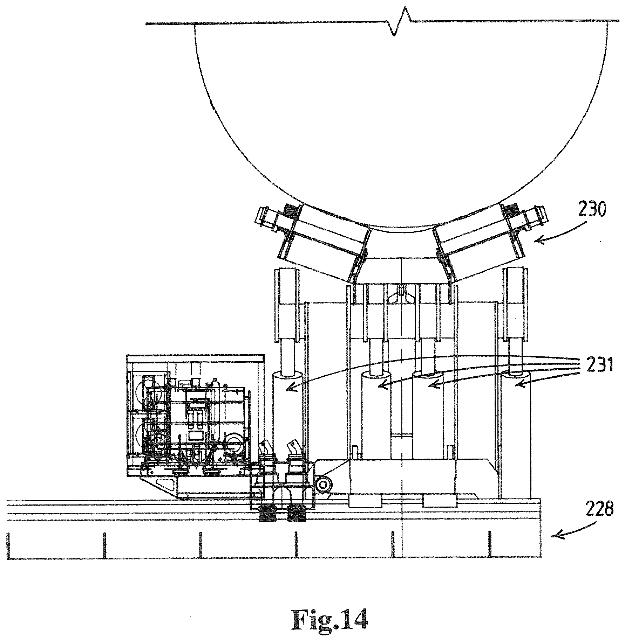

Figure 14 shows a side view of the pile transport cart 227.

Figure 15 shows a frontal view of the pile transport cart 227 with a pile support cradle 230 in a lifted position and Figure 15 shows a frontal view of the pile transport cart 227 227 with the pile support cradle 230 in a lowered position.

The pile transport track comprises two sets of rails 228, each set of rails supporting a pile transport cart 227, that extend between a pile storage location on the deck of the vessel and the pile holder 203. The transport carts 227 are thus moveable supported by the transport track 226, more in particular by the rails 228 of the transport track 226 for transporting the pile 205, in the horizontal orientation, along the transport track 226 in the substantially horizontal pile transfer direction 215, through the pile transfer opening 213 of the lower ring and the upper ring, and into the pile holder 203. In Figure 11 the pile 205 is supported by the two pile transport carts 227 while the pile is being moved in the pile transfer direction, into the pile holder 203.

In the particular embodiment shown, the pile transport carts 227 are each configured to in unison lift the pile, in the horizontal orientation, e.g. to lift a pile out of a pile storage cradle mounted on a deck on which the pile upending and holding system is also mounted, and to in unison move the pile along the transport track, e.g. to move the pile between a storage location and the pile holder, and preferably for moving the pile in the substantially horizontal lateral pile transfer direction through the pile transfer opening of the pile holder.

In the embodiment shown, the pile storage cradles are mounted on the deck of the vessel, deck on which the pile upending and holding system is also mounted, and each comprise two pile supports at opposite sides of the transport track for supporting a pile, in a horizontal orientation, at the feed end of the pile and for supporting the pile at the top end thereof.

In the particular embodiment shown, the pile transport carts 227 are not only configured to transport a pile in the pile transfer direction, but are also configured to lift the pile, while the pile is in a horizontal configuration, in a substantially vertical direction out of a pile storage cradle.

The pile transport carts 227 comprises a four rod mechanism, with a base 229 moveable mounted on the transport track 226, more in particular on the rails 228 of the transport track, a pile support cradle 230 for supporting the pile, and at two support arms 231 extending between the base 229 and the pile support cradle 230.

The base 229, the pile support cradle 230 and the two support arms 231 form a four rod mechanism. The four rod mechanism comprises:
- the base 229, which base 229 is mounted on the carriage,
- a main support arm 231a, i.e. one of the support arms 231, which main support arm at one end is pivotable mounted to the base 229 and at an opposite end is pivotable mounted to the pile support cradle 230, and
- a secondary support arm 231b, i.e. another support arm of the support arms 231, which main support arm 231b at one end is pivotable mounted to the base 229 and at an opposite end is pivotable mounted to the pile support cradle 230, and is parallel to the main support arm 231a.

Thus, the four rod mechanism makes that the pile support cradle 230 is held in the upright position while being lifted or lowered.

The transport cart is furthermore provided with a linear actuator for lifting and lowering the cradle relative to the base of the transport cart. In the exemplary embodiment shown, the transport cart comprises a linear actuator 231 in the form of a hydraulic cylinder.

The linear actuator is at one end pivotable mounted to the base, and is at an opposite end pivotable mounted to a support mounted on the main support arm and extending at an angle to a longitudinal axis of the main arm, such that the opposite ends of the linear actuator are located on opposite sides of the main beam.

In the embodiment of the transport carts 227 shown, the hinge axis of the four rod mechanism extend perpendicular to the track, more in particular perpendicular to the rails supporting the carts, such that the pile support cradle, when moved between a lowered and a lifted position, is moved along a curved trajectory in a plane perpendicular to the track, more in particular perpendicular to the rails of the track.

In the exemplary embodiment shown pile transport carts 227 are furthermore configured to move the pile 205 in an axial direction, i.e. along a longitudinal axis of the pile. The pile support cradles 230 of the transport arts each comprises multiple pile support rollers 235, and a drive 236 for rotating the multiple pile support rollers, and thus move the pile in an axial direction thereof. Thus, once the pile is lifted from the pile supports, the pile can be moved along the transport track by moving the transport carts along the transport track, and the pile can be moved in an axial direction, i.e. along the longitudinal axis of the pile, by driving the pile support rollers.

In the exemplary embodiment shown, the transport carts 227 comprises a sliding support arm 244, which support arm is at one end slidable mounted on the base of the cart 227, and is at an opposite end pivotable mounted on the main support arm, which support arm can be locked in a position, preventing sliding of the support arm, to support the weight of the cradle, and at least part of the weight supported by the cradle.

Thus, the further pile transport and positioning system is configured to transport and positon foundation piles along the deck of a vessel between a pile storage location and a pile holder, and to position the pile relative to the pile holder.

By providing a pile transport and positioning system, no crane needs to be used for moving the pile. The system thus allows for moving the pile closely along the deck, which keeps the centre of gravity of the pile close to the deck. Furthermore, the system allows for a better control of the pile during transport. For example, a pile lifted by a crane is probe to swinging movement. Also, the deck mounted system allows for a more precise, and better controlled positioning of the pile relative to a pile holder. This is in particular beneficial when handling foundation piles, which due to their large size and heavy weight, are difficult to control, in particular when supported by wires.

## Claims

1. Pile upending and holding system (101) configured to be mounted on a vessel (120;220), e.g. for installation of a pile (105;205) adapted to support an offshore wind turbine, comprising:
- a support assembly (102;202) configured to be mounted on the vessel (120;220), e.g. on a deck (121;221) of the vessel (120;220),
- a pile holder (103;203) tiltable mounted on the support assembly (102;202), wherein the pile holder (103;203) is tiltable about a substantially horizontal tilt axis (104;204) relative to the support assembly (102;202) between a horizontal orientation, in which the pile holder (103;203) is able to receive and support a pile (105;205) in a substantially horizontal orientation prior to upending, and a vertical orientation, in which the pile holder (103;203) is able to hold a pile (105;205) in a substantially vertical orientation, e.g. for installation of the pile (105;205),
wherein the pile holder (103;203) comprises:
- a ring (106a;206a), for engaging the pile (105;205),
- a pile holder frame (107;207) supporting the ring (106a;206a),
- a pile foot end support (108;208), the pile foot end support (108;208) vertically below the ring (106a;206a) when the pile holder (103;203) is in the vertical orientation, wherein the pile foot end support (108;208) is secured to the pile holder frame (107;207) and/or to the ring (106a;206a),
wherein the pile foot end support (208) is configured to engage with the pile foot end of the pile in order to limit longitudinal movement of the pile, at least during upending of the pile,
wherein the ring comprises multiple pile engaging devices (109;209) distributed about the circumference of the ring (106a;206a), each pile engaging device being adapted to engage an exterior of a pile (107;207) extending through the ring (106a;206a),
wherein the ring comprises a ring base (111), mounted to the pile holder frame (107;207), and wherein the ring base extends along a section of the circumference of the ring (106a;206a), between a first end and a second end, and the ring base defines a pile transfer opening (113;214) between the first and second end, and wherein the ring base (111) at the first end and/or at the second end is provided with a moveable jaw (112a,112b; 212a, 212b), e.g. a semi-circular jaw, each jaw being movable between:
- a closed position, wherein the ring (106a;206a) forms a closed annulus, and
- an opened position, wherein the pile transfer opening (113;213) is open to allow for a pile (107;207) to be moved in a lateral direction, i.e. in a direction substantially perpendicular to a longitudinal axis of the pile (105;205), through the pile transfer opening (113;213) into a position in the pile holder (103;203), in which position of the pile (105;205) the one or more moveable jaws (112a, 112b; 212a,212b) of the ring can be moved into the closed position such that the pile (105;205) is received in the closed annulus of the ring (106a;106a),
wherein the section, along which the ring base (111) extends along the circumference of the ring (106a;206a), is long enough, and thus the pile transfer opening (113;213) is wide enough, to enable the pile (105;205) to be moved in a first lateral pile transfer direction and in a second lateral pile transfer direction through the pile transfer opening, and wherein the first lateral pile transfer direction is at an angle to the second lateral pile transfer direction, preferably is at an angle in the range of 45 degrees to 120 degrees, preferably is at an angle of 90 degrees,
wherein the pile holder (103;203) is embodied with the pile transfer opening (113;213) of the ring facing horizontally sideways and at least partially upwards, such that when the pile holder (103;203) is in the horizontal orientation, the first lateral pile transfer direction is substantially horizontal and the second lateral pile transfer direction is substantially vertical,
such that when the pile holder (103;203) is in the horizontal orientation, the pile transfer opening (113;113) allows for moving the pile (105;205) in a horizontal orientation in the substantially horizontal pile transfer direction through the pile transfer opening (113;213), and
such that when the pile holder (103;203) is in the vertical orientation, the pile transfer opening (113;213) allows for moving the pile (105;205) away from the vessel (120;220) in the second lateral pile transfer direction through the pile transfer opening (113;213), and
wherein the pile holder (103;203) is embodied so that, when the pile holder (103;203) is in the horizontal orientation, the ring base (111) of the ring (106a;206a) forms a bottom section of the annulus, for supporting the pile (105;205) when received in the pile holder (103;203).

2. Pile upending and holding system according to claim 1, wherein the support assembly is configured to provide compensation for wave-induced motion of the vessel to maintain a predetermined X-Y location of the pile holder independent of the wave-induced motion of the vessel.

3. Pile upending and holding system according to claim 1 or claim 2, wherein the ring base of the ring is at the bottom section provided with at least one pile engaging device, for engaging and supporting the pile when received in the pile holder.

4. Pile upending and holding system according to any of the claims 1-3, wherein, the ring is a lower ring, and the pile holder furthermore comprises an upper ring, wherein the pile holder frame supports the lower ring and the upper ring, the upper ring being spaced from the lower ring, and vertically above the lower ring when the pile holder is in the vertical orientation, and wherein, the upper ring comprises a ring base mounted to the pile holder frame and one or more movable jaws, e.g. two semi-circular jaws, each jaw being movable between:
- a closed position, wherein the upper ring forms a closed annulus, and
- an opened position, wherein the upper ring defines a pile transfer opening, and in which opened position the jaws allow for a pile to be moved in a lateral direction, i.e. in a direction substantially perpendicular to a longitudinal axis of the pile, through the pile transfer opening into a position in the pile holder, in which position of the pile the one or more moveable jaws of the upper ring can be moved into the closed position such that the pile is received in the closed annulus of the upper ring.

5. Pile upending and holding system according to claim 4, wherein, when the pile holder is in the vertical orientation, the tilt axis of the pile holder is located vertically between the lower ring and the upper ring.

6. Pile upending and holding system according to any of the claims 1-5, wherein the support assembly comprises one or more first rails extending in a longitudinal direction, a positioning frame movably supported on said one or more first rails in said longitudinal direction, where the positioning frame is provided with one or more second rails extending in a transverse direction, i.e. transverse to the longitudinal direction, and a support frame movably supported on said one or more second rails in said transverse direction, wherein the pile holder is supported tiltable about the tilt axis by the support frame.

7. Pile upending and holding system according to any of the claims 1-6, wherein the substantially horizontal pile transfer direction is parallel to the substantially horizontal tilt axis of the pile holder.

8. Pile upending and holding system according to any of the claims 1-7, wherein the support assembly comprises a base frame and a support frame, mounted on the base frame, and wherein the support frame tiltable supports the pile holder such that the tilt axis is spaced from the base frame and such that, when the base frame is mounted on a vessel, the tilt axis is located outside a contour of that vessel, when seen in a top view.

9. Pile upending and holding system according to claim 8, wherein, when the pile holder is in the horizontal orientation, the tilt axis intersects with the annulus of the ring, or with the annulus of the lower ring and the annulus of the upper ring, when seen in a direction parallel to a central axis of said annulus, or said annuli.

10. Pile upending and holding system according to any of the claims 1-9, wherein the pile upending and holding system further comprises a transport track and a pile transport cart, moveable supported by the transport track, for transporting the pile, in the horizontal orientation, along the transport track in the substantially horizontal pile transfer direction, through the pile transfer opening of the ring, or of the pile transfer opening of the lower ring and the pile transfer opening of the upper ring, and into the pile holder.

11. Pile upending and holding system according to claim 10, wherein the pile transport cart comprises a four rod mechanism, with a base movable mounted on the transport track, a pile support cradle for supporting the pile, and at least two support arms extending between the base and the pile support cradle.

12. Pile upending and holding system according to any of claims 1 - 11, wherein the pile foot end support comprises one or more pivotal arms that are movable between an operative position, wherein the one or more pivotal arms extend underneath the pile foot end of a pile supported in the vertical orientation in the holder, and an opened position, wherein the one or more pivotal arms are cleared from the pile foot end.

13. Method for upending and installation of a pile in the seabed, wherein use is made of a system according to any one of claims 1-12, wherein the method comprises, with the vessel in floating condition:
a. transporting the pile in a horizontal orientation to an offshore installation site;
b. positioning the pile holder in the horizontal orientation and moving the one or more jaws of the ring, or the one or more jaws of the lower ring and the upper ring, into the opened position, such that the pile transfer opening is facing sideways and at least partially upwards, or the pile transfer openings are facing sideways and at least partially upwards respectively;
c. moving the pile in horizontal orientation in a substantially horizontal pile transfer direction through the pile transfer opening or pile transfer openings, and placing the pile in horizontal orientation with a lower end portion thereof on the ring base of the ring, or on the ring base of the lower ring and the ring base of the upper ring;
d. moving the one or more jaws of the ring, or of the lower ring and the upper ring, into the closed position, thus receiving the pile in the closed annuli of the ring or rings respectively;
e. upending the pile into a vertical orientation by means of lifting an upper end portion of the pile, so that the pile, held at the lower end portion thereof, in the pile holder, tilts about the horizontal tilt axis, and wherein the pile foot end support limits longitudinal movement of the pile in a downward direction, during the upending of the pile;
f. disengaging the pile foot end support from the lower end portion of the pile; and
g. lowering the pile into the water while being held and guided by the pile holder, more in particular by the pile engaging devices of the pile holder, and preferably providing compensation for wave-induced motion of the vessel with the support assembly to maintain a predetermined X-Y location of the pile holder independent of the wave-induced motion of the vessel.

14. Method according to claim 13, wherein the pile, when moved in the substantial horizontal pile transfer direction into the pile holder, is moved in a direction substantially perpendicular to a longitudinal axis of the pile.

15. Vessel provided with a pile upending and holding system according to any of the claims 1-12, preferably for performing a method according to any of the claims 13-14, wherein the vessel has a longitudinal axis extending between a bow and a stern of the vessel, and wherein the vessel comprises a crane for upending a pile held in the pile holder.

## Patentansprüche

1. System (101) zum Aufrichten und Halten eines Pfahls, das dafür ausgelegt ist, auf einem Schiff (120;220) montiert zu werden, z. B. für die Installation eines Pfahls (105;205), der dazu eingerichtet ist, eine Offshore-Windturbine zu tragen, umfassend:
- eine Halteanordnung (102;202), die dafür ausgelegt ist, auf dem Schiff (120;220), z. B. auf einem Deck (121;221) des Schiffes (120;220), montiert zu werden,
- einen Pfahlhalter (103;203), der kippbar an der Halteanordnung (102;202) montiert ist, wobei der Pfahlhalter (103;203) um eine im Wesentlichen horizontale Kippachse (104;204) relativ zur Halteanordnung (102;202) zwischen einer horizontalen Ausrichtung, in der der Pfahlhalter (103;203) einen Pfahl (105;205) vor dem Aufrichten aufnehmen und in einer im Wesentlichen horizontalen Ausrichtung halten kann, und einer vertikalen Ausrichtung, in der der Pfahlhalter (103;203) einen Pfahl (105;205) in einer im Wesentlichen vertikalen Ausrichtung, z. B. für die Installation des Pfahls (105;205), halten kann, kippbar ist,
wobei der Pfahlhalter (103;203) Folgendes umfasst:
- einen Ring (106a;206a), um mit dem Pfahl (105;205) in Eingriff zu kommen;
- einen Pfahlhalterrahmen (107;207), der den Ring (106a;206a) trägt;
- eine Pfahlfußendstütze (108;208), wobei die Pfahlfußendstütze (108;208) vertikal unterhalb des Rings (106a;206a) liegt, wenn sich der Pfahlhalter (103;203) in der vertikalen Ausrichtung befindet, wobei die Pfahlfußendstütze (108;208) am Pfahlhalterrahmen (107;207) und/oder am Ring (106a;206a) befestigt ist,
wobei die Pfahlfußendstütze (208) dazu ausgelegt ist, mit dem Pfahlfußende des Pfahls in Eingriff zu kommen, um eine Längsbewegung des Pfahls zumindest während des Aufrichtens des Pfahls zu begrenzen,
wobei der Ring mehrere Pfahleingriffsvorrichtungen (109;209) umfasst, die über den Umfang des Rings (106a;206a) verteilt sind, wobei jede Pfahleingriffsvorrichtung dazu eingerichtet ist, mit einer Außenseite eines Pfahls (107;207) in Eingriff zu kommen, der sich durch den Ring (106a;206a) erstreckt,
wobei der Ring eine Ringbasis (111) umfasst, die an dem Pfahlhalterrahmen (107;207) montiert ist, und wobei sich die Ringbasis entlang eines Abschnitts des Umfangs des Rings (106a;206a) zwischen einem ersten Ende und einem zweiten Ende erstreckt und die Ringbasis eine Pfahlübergabeöffnung (113;214) zwischen dem ersten und dem zweiten Ende definiert, und wobei die Ringbasis (111) an dem ersten Ende und/oder an dem zweiten Ende mit einer bewegbaren Backe (112a,112b; 212a, 212b), z. B. einer halbkreisförmigen Backe, versehen ist, wobei jede Backe bewegbar ist zwischen:
- einer geschlossenen Position, in der der Ring (106a;206a) einen geschlossenen Ring bildet, und
- einer geöffneten Position, in der die Pfahlübergabeöffnung (113;213) offen ist, um zu ermöglichen, dass ein Pfahl (107;207) in einer lateralen Richtung, d. h. in einer Richtung im Wesentlichen senkrecht zu einer Längsachse des Pfahls (105;205), durch die Pfahlübergabeöffnung (113;213) in eine Position in dem Pfahlhalter (103;203) bewegt wird, wobei in dieser Position des Pfahls (105;205) die eine oder die mehreren bewegbaren Backen (112a, 112b; 212a,212b) des Rings in die geschlossene Position bewegt werden können, sodass der Pfahl (105;205) in dem geschlossenen Ring des Rings (106a;106a) aufgenommen ist,
wobei der Abschnitt, entlang dem sich die Ringbasis (111) entlang des Umfangs des Rings (106a;206a) erstreckt, lang genug ist und somit die Pfahlübergabeöffnung (113;213) breit genug ist, um zu ermöglichen, dass der Pfahl (105;205) in einer ersten lateralen Pfahlübergaberichtung und in einer zweiten lateralen Pfahlübergaberichtung durch die Pfahlübergabeöffnung bewegt wird, und wobei die erste laterale Pfahlübergaberichtung in einem Winkel zu der zweiten lateralen Pfahlübergaberichtung ist, vorzugsweise in einem Winkel im Bereich von 45 Grad bis 120 Grad ist, vorzugsweise in einem Winkel von 90 Grad ist,
wobei der Pfahlhalter (103;203) so ausgebildet ist, dass die Pfahlübergabeöffnung (113;213) des Rings horizontal seitlich und zumindest teilweise nach oben weist, so dass, wenn sich der Pfahlhalter (103;203) in der horizontalen Ausrichtung befindet, die erste laterale Pfahlübergaberichtung im Wesentlichen horizontal ist und die zweite laterale Pfahlübergaberichtung im Wesentlichen vertikal ist,
sodass, wenn sich der Pfahlhalter (103;203) in der horizontalen Ausrichtung befindet, die Pfahlübergabeöffnung (113;113) das Bewegen des Pfahls (105;205) in einer horizontalen Ausrichtung in der im Wesentlichen horizontalen Pfahlübergaberichtung durch die Pfahlübergabeöffnung (113;213) ermöglicht, und
sodass, wenn sich der Pfahlhalter (103;203) in der vertikalen Ausrichtung befindet, die Pfahlübergabeöffnung (113;213) das Bewegen des Pfahls (105;205) weg von dem Schiff (120;220) in der zweiten lateralen Pfahlübergaberichtung durch die Pfahlübergabeöffnung (113;213) ermöglicht, und
wobei der Pfahlhalter (103;203) so ausgebildet ist, dass bei horizontaler Ausrichtung des Pfahlhalters (103;203) die Ringbasis (111) des Rings (106a;206a) einen unteren Abschnitt des Rings bildet, um den Pfahl (105;205) bei Aufnahme in dem Pfahlhalter (103;203) zu stützen.

2. System zum Aufrichten und Halten eines Pfahls nach Anspruch 1, wobei die Stützanordnung dazu ausgelegt ist, eine Kompensation für eine welleninduzierte Bewegung des Schiffes bereitzustellen, um eine vorbestimmte X-Y-Position des Pfahlhalters unabhängig von der welleninduzierten Bewegung des Schiffes aufrechtzuerhalten.

3. System zum Aufrichten und Halten eines Pfahls nach Anspruch 1 oder 2, wobei die Ringbasis des Rings an dem unteren Abschnitt mit mindestens einer Pfahleingriffsvorrichtung versehen ist, um mit dem Pfahl in Eingriff zu kommen und diesen zu stützen, wenn er in dem Pfahlhalter aufgenommen ist.

4. System zum Aufrichten und Halten eines Pfahls nach einem der Ansprüche 1-3, wobei der Ring ein unterer Ring ist und der Pfahlhalter ferner einen oberen Ring umfasst, wobei der Pfahlhalterrahmen den unteren Ring und den oberen Ring stützt, wobei der obere Ring von dem unteren Ring beabstandet ist, und vertikal über dem unteren Ring, wenn sich der Pfahlhalter in der vertikalen Ausrichtung befindet, und wobei der obere Ring eine Ringbasis, die an dem Pfahlhalterrahmen montiert ist, und eine oder mehrere bewegbare Backen, z. B. zwei halbkreisförmige Backen, umfasst, wobei jede Backe bewegbar ist zwischen:
- einer geschlossenen Position, in der der obere Ring einen geschlossenen Ring bildet, und
- einer geöffneten Position, in der der obere Ring eine Pfahlübergabeöffnung definiert, und wobei in der geöffneten Position die Backen eine Bewegung eines Pfahls in einer lateralen Richtung, d. h. in einer Richtung im Wesentlichen senkrecht zu einer Längsachse des Pfahls, durch die Pfahlübergabeöffnung in eine Position im Pfahlhalter ermöglichen, wobei in dieser Position des Pfahls die eine oder die mehreren bewegbaren Backen des oberen Rings in die geschlossene Position bewegt werden können, sodass der Pfahl im geschlossenen Ring des oberen Rings aufgenommen wird.

5. System zum Aufrichten und Halten eines Pfahls nach Anspruch 4, wobei bei vertikaler Ausrichtung des Pfahlhalters die Kippachse des Pfahlhalters vertikal zwischen dem unteren Ring und dem oberen Ring angeordnet ist.

6. System zum Aufrichten und Halten eines Pfahls nach einem der Ansprüche 1-5, wobei die Stützanordnung Folgendes umfasst: eine oder mehrere erste Schienen, die sich in einer Längsrichtung erstrecken, einen Positionierungsrahmen, der bewegbar auf der einen oder den mehreren ersten Schienen in der Längsrichtung gestützt ist, wobei der Positionierungsrahmen mit einer oder mehreren zweiten Schienen versehen ist, die sich in einer Querrichtung, d. h. quer zur Längsrichtung, erstrecken, und einen Halterahmen, der in der Querrichtung bewegbar auf der einen oder den mehreren zweiten Schienen gelagert ist, wobei der Pfahlhalter durch den Halterahmen um die Kippachse kippbar gelagert ist.

7. System zum Aufrichten und Halten eines Pfahls nach einem der Ansprüche 1-6, wobei die im Wesentlichen horizontale Pfahlübergaberichtung parallel zu der im Wesentlichen horizontalen Kippachse des Pfahlhalters ist.

8. System zum Aufrichten und Halten eines Pfahls nach einem der Ansprüche 1-7, wobei die Halteanordnung einen Basisrahmen und einen Halterahmen, der an dem Basisrahmen montiert ist, umfasst, und wobei der Halterahmen den Pfahlhalter kippbar so stützt, dass die Kippachse von dem Basisrahmen beabstandet ist und so, dass, wenn der Basisrahmen an einem Schiff montiert ist, die Kippachse außerhalb einer Kontur dieses Schiffs liegt, wenn es in einer Draufsicht betrachtet wird.

9. System zum Aufrichten und Halten eines Pfahls nach Anspruch 8, wobei die Kippachse in horizontaler Ausrichtung des Pfahlhalters den Ring des Rings oder den Ring des unteren Ringes und den Ring des oberen Ringes schneidet, wenn in einer Richtung parallel zu einer Mittelachse des Ringes oder der Ringe gesehen.

10. System zum Aufrichten und Halten eines Pfahls nach einem der Ansprüche 1-9, wobei das System zum Aufrichten und Halten eines Pfahls ferner eine Transportbahn und einen Pfahltransportwagen umfasst, der durch die Transportbahn bewegbar unterstützt wird, um den Pfahl in der horizontalen Ausrichtung entlang der Transportbahn in der im Wesentlichen horizontalen Pfahlübergaberichtung durch die Pfahlübergabeöffnung des Rings, oder durch die Pfahlübergabeöffnung des unteren Rings und die Pfahlübergabeöffnung des oberen Rings und in den Pfahlhalter zu transportieren.

11. System zum Aufrichten und Halten eines Pfahls nach Anspruch 10, wobei der Pfahltransportwagen einen Vierstangenmechanismus mit einer auf der Transportbahn beweglichen Basis, einer Pfahlstützhalterung zum Stützen des Pfahls und mindestens zwei Stützarmen umfasst, die sich zwischen der Basis und der Pfahlstützhalterung erstrecken.

12. System zum Aufrichten und Halten eines Pfahls nach einem der Ansprüche 1 bis 11, wobei die Pfahlfußendstütze einen oder mehrere Schwenkarme umfasst, die zwischen einer Betriebsposition, in der sich der eine oder die mehreren Schwenkarme unterhalb des Pfahlfußendes eines Pfahls erstrecken, der in der vertikalen Ausrichtung in dem Halter gestützt wird, und einer geöffneten Position, in der der eine oder die mehreren Schwenkarme von dem Pfahlfußende entfernt sind, bewegbar sind.

13. Verfahren zum Aufrichten und Installieren eines Pfahls in den Meeresboden, wobei ein System nach einem der Ansprüche 1-12 verwendet wird, wobei, mit dem Schiff im schwimmenden Zustand, das Verfahren Folgendes umfasst:
a. Transportieren des Pfahls in einer horizontalen Ausrichtung zu einem Offshore-Installationsort;
b. Positionieren des Pfahlhalters in der horizontalen Ausrichtung und Bewegen der einen oder der mehreren Backen des Rings oder der einen oder der mehreren Backen des unteren Rings und des oberen Rings in die geöffnete Position, so dass die Pfahlübergabeöffnung zur Seite und zumindest teilweise nach oben weist oder die Pfahlübergabeöffnungen zur Seite bzw. zumindest teilweise nach oben weisen;
c. Bewegen des Pfahls in horizontaler Ausrichtung in einer im Wesentlichen horizontalen Pfahlübergaberichtung durch die Pfahlübergabeöffnung oder Pfahlübergabeöffnungen und Anordnen des Pfahls in horizontaler Ausrichtung mit einem unteren Endabschnitt davon auf der Ringbasis des Rings oder auf der Ringbasis des unteren Rings und der Ringbasis des oberen Rings;
d. Bewegen der einen oder mehreren Backen des Rings oder des unteren Rings und des oberen Rings in die geschlossene Position, wodurch der Pfahl in den geschlossenen Ringen des Rings bzw. der Ringe aufgenommen wird;
e. Aufrichten des Pfahls in eine vertikale Ausrichtung mittels Anheben eines oberen Endabschnitts des Pfahls, so dass der Pfahl, der an seinem unteren Endabschnitt in dem Pfahlhalter gehalten wird, um die horizontale Kippachse kippt, und wobei die Pfahlfußendstütze die Längsbewegung des Pfahls nach unten während des Aufrichtens des Pfahls begrenzt;
f. Lösen der Pfahlfußendstütze vom unteren Endabschnitt des Pfahls; und
g. Absenken des Pfahls in das Wasser, während er von dem Pfahlhalter gehalten und geführt wird, insbesondere durch die Pfahleingriffsvorrichtungen des Pfahlhalters, und vorzugsweise Kompensation einer welleninduzierten Bewegung des Schiffes mit der Stützanordnung bereitstellend, um eine vorbestimmte X-Y-Position des Pfahlhalters unabhängig von der welleninduzierten Bewegung des Schiffes aufrechtzuerhalten.

14. Verfahren nach Anspruch 13, wobei der Pfahl bei Bewegung in der im Wesentlichen horizontalen Pfahlübergaberichtung in den Pfahlhalter in einer Richtung im Wesentlichen senkrecht zu einer Längsachse des Pfahls bewegt wird.

15. Schiff, das mit einem System zum Aufrichten und Halten eines Pfahls nach einem der Ansprüche 1-12 versehen ist, vorzugsweise zum Durchführen eines Verfahrens nach einem der Ansprüche 13-14, wobei das Schiff eine Längsachse aufweist, die sich zwischen einem Bug und einem Heck des Schiffes erstreckt, und wobei das Schiff einen Kran zum Aufrichten eines Pfahls umfasst, der in dem Pfahlhalter gehalten wird.

## Revendications

1. Système de redressement et de maintien de pieu (101) conçu pour être fixé sur un navire (120 ; 220), par ex. pour l'installation d'un pieu (105 ; 205) propre à supporter une éolienne en mer, comprenant :
- un ensemble de support (102 ; 202) conçu pour être monté sur le navire (120 ; 220), par ex. sur un pont (121 ; 221) du navire (120 ; 220),
- un dispositif de maintien de pieu (103 ; 203) fixé de manière inclinable sur l'ensemble de support (102 ; 202), le dispositif de maintien de pieu (103 ; 203) étant inclinable autour d'un axe d'inclinaison (104 ; 204) sensiblement horizontal relativement à l'ensemble de support (102 ; 202) entre une orientation horizontale, dans laquelle le dispositif de maintien de pieu (103 ; 203) est capable de recevoir et supporter un pieu (105 ; 205) dans une orientation sensiblement horizontale avant le redressement, et une orientation verticale, dans laquelle le dispositif de maintien de pieu (103 ; 203) est capable de maintenir un pieu (105 ; 205) dans une orientation sensiblement verticale, par ex. pour l'installation du pieu (105 ; 205),
le dispositif de maintien de pieu (103 ; 203) comprenant :
- un collier (106a ; 206a), destiné à venir en contact avec le pieu (105 ; 205),
- une structure de dispositif de maintien de pieu (107 ; 207) supportant le collier (106a ; 206a),
- un support d'extrémité de pied de pieu (108 ; 208), le support d'extrémité de pied de pieu (108 ; 208) étant verticalement sous le collier (106a ; 206a) lorsque le dispositif de maintien de pieu (103 ; 203) est dans l'orientation verticale, le support d'extrémité de pied de pieu (108 ; 208) étant fixé à la structure de dispositif de maintien de pieu (107 ; 207) et/ou au collier (106a ; 206a),
le support d'extrémité de pied de pieu (208) étant conçu pour venir en contact avec l'extrémité de pied de pieu du pieu afin de limiter le mouvement longitudinal du pieu, au moins pendant le redressement du pieu,
le collier comprenant de multiples dispositifs de contact avec le pieu (109 ; 209) répartis autour de la circonférence du collier (106a ; 206a), chaque dispositif de contact avec le pieu étant conçu pour venir en contact avec l'extérieur d'un pieu (107 ; 207) s'étendant à travers le collier (106a ; 206a), le collier comprenant une base de collier (111) montée sur la structure de dispositif de maintien de pieu (107 ; 207), la base de collier s'étendant le long d'une section de la circonférence du collier (106a ; 206a), entre une première extrémité et une seconde extrémité, et la base de collier définissant une ouverture de transfert de pieu (113 ; 214) entre la première et la seconde extrémité, et la base de collier (111) au niveau d'une première extrémité et/ou d'une seconde extrémité étant pourvue d'une mâchoire mobile (112a ; 112b ; 212a, 212b), par ex. une mâchoire semicirculaire, chaque mâchoire étant mobile entre :
- une position fermée, dans laquelle le collier (106a ; 206a) forme un anneau fermé, et
- une position ouverte, dans laquelle l'ouverture de transfert de pieu (113 ; 213) est ouverte pour permettre à un pieu (107 ; 207) d'être déplacé dans une direction latérale, c'est-à-dire dans une direction sensiblement perpendiculaire à un axe longitudinal du pieu (105 ; 205), à travers l'ouverture de transfert de pieu (113 ; 213) dans une position dans le dispositif de maintien de pieu (103 ; 203), position du pieu (105 ; 205) dans laquelle la ou les mâchoires mobiles (112a, 112b ; 212a, 212b) du collier peuvent être déplacées dans la position fermée de sorte que le pieu (105 ; 205) soit reçu dans l'anneau fermé du collier (106a ; 106a),
la section, le long de laquelle la base de collier (111) s'étend le long de la circonférence du collier (106a ; 206a), étant suffisamment longue, et ainsi l'ouverture de transfert de pieu (113 ; 213) étant suffisamment large pour permettre au pieu (105 ; 205) d'être déplacé dans une première direction latérale de transfert de pieu et dans une seconde direction latérale de transfert de pieu à travers l'ouverture de transfert de pieu, et la première direction latérale de transfert de pieu faisant un angle relativement à la seconde direction latérale de transfert de pieu, de préférence un angle compris entre 45 degrés et 120 degrés, de préférence un angle de 90 degrés,
le dispositif de maintien de pieu (103 ; 203) étant intégré avec l'ouverture de transfert de pieu (113 ; 213) du collier orientée horizontalement vers le côté et au moins partiellement vers le haut, de sorte que lorsque le dispositif de maintien de pieu (103 ; 203) est dans l'orientation horizontale, la première direction latérale de transfert de pieu soit sensiblement horizontale et la seconde direction latérale de transfert de pieu soit sensiblement verticale,
de sorte que lorsque le dispositif de maintien de pieu (103 ; 203) est dans l'orientation horizontale, l'ouverture de transfert de pieu (113 ; 113) permette de déplacer le pieu (105 ; 205) dans une orientation horizontale dans la direction de transfert de pieu sensiblement horizontale à travers l'ouverture de transfert de pieu (113 ; 213), et
de sorte que lorsque le dispositif de maintien de pieu (103 ; 203) est dans l'orientation verticale, l'ouverture de transfert de pieu (113 ; 213) permette de déplacer le pieu (105 ; 205) à l'opposé du récipient (120 ; 220) dans la seconde direction latérale de transfert de pieu à travers l'ouverture de transfert de pieu (113 ; 213), et
le dispositif de maintien de pieu (103 ; 203) étant conçu de sorte que, lorsque le dispositif de maintien de pieu (103 ; 203) est dans l'orientation horizontale, la base de collier (111) du collier (106a ; 206a) forme une section inférieure de l'anneau, pour supporter le pieu (105 ; 205) lorsqu'il est reçu dans le dispositif de maintien de pieu (103 ; 203).

2. Système de redressement et de maintien de pieu selon la revendication 1, l'ensemble de support étant conçu pour compenser les mouvements, provoqués par les vagues, du navire afin de maintenir un emplacement X-Y prédéterminé du dispositif de maintien de pieu indépendant des mouvements, provoqués par les vagues, du navire.

3. Système de redressement et de maintien de pieu selon la revendication 1 ou la revendication 2, la base de collier du collier étant munie, au niveau de la section inférieure, d'au moins un dispositif de contact avec le pieu, pour entrer en contact avec le pieu et le supporter lorsqu'il est reçu dans le dispositif de maintien de pieu.

4. Système de redressement et de maintien de pieu selon l'une quelconque des revendications 1 à 3, le collier étant un collier inférieur, et le dispositif de maintien de pieu comprenant en outre un collier supérieur, la structure de dispositif de maintien de pieu supportant le collier inférieur et le collier supérieur, le collier supérieur étant espacé du collier inférieur, et verticalement au-dessus du collier inférieur lorsque le dispositif de maintien de pieu est dans l'orientation verticale, et le collier supérieur comprenant une base de collier fixée sur la structure de dispositif de maintien de pieu et une ou plusieurs mâchoires mobiles, par ex. deux mâchoires semicirculaires, chaque mâchoire étant mobile entre :
- une position fermée, dans laquelle le collier supérieur forme un anneau fermé, et
- une position ouverte, dans laquelle le collier supérieur définit une ouverture de transfert de pieu, et dans laquelle position ouverte les mâchoires permettent à un pieu d'être déplacé dans une direction latérale, c'est-à-dire dans une direction sensiblement perpendiculaire à un axe longitudinal du pieu, à travers l'ouverture de transfert de pieu dans une position dans le dispositif de maintien de pieu, position du pieu dans laquelle la ou les mâchoires mobiles du collier supérieur peuvent être déplacées dans la position fermée de sorte que le pieu soit reçu dans l'anneau fermé du collier supérieur.

5. Système de redressement et de maintien de pieu selon la revendication 4, lorsque le dispositif de maintien de pieu est dans l'orientation verticale, l'axe d'inclinaison du dispositif de maintien de pieu étant situé verticalement entre le collier inférieur et le collier supérieur.

6. Système de redressement et de maintien de pieu selon l'une quelconque des revendications 1 à 5, l'ensemble de support comprenant un ou plusieurs premiers rails s'étendant dans une direction longitudinale, une structure de positionnement supportée de manière mobile sur ledit ou lesdits premiers rails dans ladite direction longitudinale, la structure de positionnement étant pourvue d'un ou de plusieurs seconds rails s'étendant dans une direction transversale, c'est-à-dire transversale à la direction longitudinale, et une structure de support supportée de manière mobile sur ledit ou lesdits seconds rails dans ladite direction transversale, le dispositif de maintien de pieu étant supporté de manière inclinable autour de l'axe d'inclinaison par la structure de support.

7. Système de redressement et de maintien de pieu selon l'une quelconque des revendications 1 à 6, la direction de transfert de pieu sensiblement horizontale étant parallèle à l'axe d'inclinaison sensiblement horizontal du dispositif de maintien de pieu.

8. Système de redressement et de maintien de pieu selon l'une quelconque des revendications 1 à 7, l'ensemble de support comprenant une structure de base et une structure de support, fixée sur la structure de base, et la structure de support inclinable supportant le dispositif de maintien de pieu de sorte que l'axe d'inclinaison soit espacé de la structure de base et de sorte que, lorsque la structure de base est montée sur un navire, l'axe d'inclinaison soit situé à l'extérieur d'un contour de ce navire, en vue de dessus.

9. Système de redressement et de maintien de pieu selon la revendication 8, lorsque le dispositif de maintien de pieu est dans l'orientation horizontale, l'axe d'inclinaison coupant l'anneau du collier, ou l'anneau du collier inférieur et l'anneau du collier supérieur, vu dans une direction parallèle à un axe central dudit anneau, ou lesdits anneaux.

10. Système de redressement et de maintien de pieu selon l'une quelconque des revendications 1 à 9, le système de redressement et de maintien de pieu comprenant en outre une piste de transport et un chariot de transport de pieu, supporté de manière mobile par la piste de transport, pour transporter le pieu, dans l'orientation horizontale, le long de la piste de transport dans la direction de transfert de pieu sensiblement horizontale, à travers l'ouverture de transfert de pieu du collier, ou de l'ouverture de transfert de pieu du collier inférieur et de l'ouverture de transfert de pieu du collier supérieur, et dans le dispositif de maintien de pieu.

11. Système de redressement et de maintien de pieu selon la revendication 10, le chariot de transport de pieu comprenant un mécanisme à quatre tiges, avec une base mobile montée sur la piste de transport, un berceau de support de pieu pour supporter le pieu, et au moins deux bras de support s'étendant entre la base et le berceau de support de pieu.

12. Système de redressement et de maintien de pieu selon l'une quelconque des revendications 1 à 11, le support d'extrémité de pied de pieu comprenant un ou plusieurs bras pivotants qui sont mobiles entre une position opérationnelle, dans laquelle le ou les bras pivotants s'étendent sous l'extrémité de pied de pieu d'un pieu supporté dans l'orientation verticale dans le dispositif de maintien, et une position ouverte, dans laquelle le ou les bras pivotants sont séparés de l'extrémité de pied de pieu.

13. Procédé de redressement et d'installation d'un pieu dans le fond marin, faisant appel à un système selon l'une quelconque des revendications 1 à 12, le procédé comprenant, alors que le navire est dans un état de flottaison, les étapes consistant à :
a. transporter le pieu dans une orientation horizontale jusqu'à un site d'installation en mer ;
b. positionner le dispositif de maintien de pieu dans l'orientation horizontale et déplacer la ou les mâchoires du collier, ou la ou les mâchoires du collier inférieur et du collier supérieur, en position ouverte, de sorte que l'ouverture de transfert de pieu soit tournée vers le côté et au moins partiellement vers le haut, ou que les ouvertures de transfert de pieu soient respectivement tournées vers le côté et au moins partiellement vers le haut ;
c. déplacer le pieu dans une orientation horizontale dans une direction de transfert de pieu sensiblement horizontale à travers l'ouverture de transfert de pieu ou les ouvertures de transfert de pieu, et placer le pieu dans une orientation horizontale avec une partie d'extrémité inférieure de celui-ci sur la base de collier du collier, ou sur la base de collier du collier inférieur et la base de collier du collier supérieur ;
d. déplacer la ou les mâchoires du collier, ou du collier inférieur et du collier supérieur, en position fermée, recevant ainsi le pieu dans les anneaux fermés du ou des colliers respectivement ;
e. redresser le pieu dans une orientation verticale en soulevant une partie d'extrémité supérieure du pieu, de sorte que le pieu, maintenu au niveau de la partie d'extrémité inférieure de celui-ci, dans le dispositif de maintien de pieu, s'incline autour de l'axe d'inclinaison horizontal, et le support d'extrémité de pied de pieu limitant le mouvement longitudinal du pieu dans une direction descendante, pendant le redressement du pieu ;
f. séparer le support d'extrémité de pied de pieu de la partie d'extrémité inférieure du pieu ; et
g. abaisser le pieu dans l'eau tout en étant maintenu et guidé par le dispositif de maintien de pieu, plus particulièrement par les dispositifs de contact avec le pieu du dispositif de maintien de pieu, et de préférence compenser les mouvements, provoqués par les vagues, du navire avec l'ensemble support pour maintenir un emplacement X-Y prédéterminé du dispositif de maintien de pieu indépendant des mouvements, provoqués par les vagues, du navire.

14. Procédé selon la revendication 13, le pieu, lorsqu'il est déplacé dans la direction de transfert de pieu sensiblement horizontale dans le dispositif de maintien de pieu, étant déplacé dans une direction sensiblement perpendiculaire à un axe longitudinal du pieu.

15. - Navire pourvu d'un système de redressement et de maintien de pieu selon l'une quelconque des revendications 1 à 12, de préférence pour mettre en œuvre un procédé selon l'une quelconque des revendications 13 à 14, le navire ayant un axe longitudinal s'étendant entre la proue et la poupe du navire, et le navire comprenant une grue pour redresser un pieu maintenu dans le dispositif de maintien de pieu.
